# EUROPÄISCHE PATENTSCHRIFT

(11) **EP 1 266 551 B1**
(45) Veröffentlichungstag und Bekanntmachung des Hinweises auf die Patenterteilung: **06.04.2005**
(21) Anmeldenummer: 01126205.2
(22) Anmeldetag: 05.11.2001
(51) Int. Cl.: A01B 61/02, A01D 75/18

(54) **Arbeitsgerät zum Anbau an ein Fahrzeug**
Working machine for mounting on a vehicle
Appareil de travail pour le montage sur véhicule

(30) Priorität: 13.06.2001 DE 10128547
(43) Veröffentlichungstag der Anmeldung: 18.12.2002
(73) Patentinhaber: Müthing GmbH & Co. KG, 59955 Winterberg-Silbach (DE)
(72) Erfinder: Wiegert, Ludger, 48346 Ostbevern (DE)
(74) Vertreter: Lempert, Jost, Dipl.-Phys. Dr. rer.nat.

(56) Entgegenhaltungen:
- GB-A- 1 388 659
- US-A- 2 269 980
- US-A- 2 520 107

## Beschreibung

Die Erfindung betrifft ein Arbeitsgerät, wie Mäher, Mulcher, Bodenfräse oder dergleichen, zum Anbau an ein Fahrzeug, mit einem Anbaubock, einem Arbeitswerkzeug und mindestens einem beide verbindenden, um eine vertikale Achse am Anbaubock verschwenkbaren Schwenkarm.

Derartige Arbeitsgeräte, die in der Regel von einem Fahrzeug an dessen Heck getragen bzw. gezogen werden, dienen zur oberflächigen Bearbeitung von Böden, Pflanzen und Materialien sowie zur Bodenbearbeitung im weitesten Sinne als Mulcher, Mäher, Bodenfräsen oder dergleichen.

Solche Arbeitsgeräte können in einer Arbeitsposition eingesetzt werden, bei der sie seitlich neben das Fahrzeug versetzt sind. Insbesondere dann besteht die Gefahr, dass derartige Geräte gegen Hindernisse stoßen, wie insbesondere Grenzsteine, die durch hochgewachsenes Gras verdeckt werden, sonstige größere Steine (Findlinge) sowie auch Stangen von Verkehrsschildern, Telegrafenstangen, Masten oder dergleichen. Um eine Beschädigung insbesondere des Arbeitsgerätes, aber auch der genannten Stangen oder Masten zu vermeiden, sind Überlastsicherungen in Form von belasteten Sperrklinken oder kurzen Aushakklinken vorgesehen. Diese lösen aus, sobald beim Anfahren des Arbeitsgerätes an ein Hindernis eine vorgegebene Auslösekraft überschritten wird. Nachteilig ist, dass bei Wirksamwerden der Überlastsichrung und erfolgtem Ausklinken die Arbeit unterbrochen werden muss, um entweder durch Zurückfahren des Fahrzeuges oder in sonstiger manueller Weise ein erneutes Einrasten der Überlastsicherung vorzunehmen.

Die US-A-2269980 geht aus von einem an einem Traktor befestigten Mähgerät mit einer Überlastsicherung, mittels derer die Ankopplung von starrer Gelenkwelle des Traktors und des Mähgeräts aufgrund einer Ausweichbewegung des Mähgeräts entkoppelt werden. Um eine einfache Wiederverbindung nach einer solchen Entkopplung zu ermöglichen, sieht die Druckschrift eine angetriebene Feder und ein quadratisches Endstück zur Einführung in eine am Traktor befindliche Antriebseinheit mit einem Aufnahmetrichter vor. Das Mähgerät kann nur horizontal ausweichen, indem es um einen axialen Drehpunkt am äußerst rechten Ende der starren Verbindung zum Traktor drehen kann. Die Ausweichbewegung wird durch eine plötzlich auftretende Kraft aufgrund eines Hindernisses aufgelöst, die einen Klinkenmechanismus überwindet, der zwei Haltestangen teleskopartig nebeneinander verbindet. Löst der Mechanismus aus, so kann eine Stange zurückgleiten bis zu einem Anschlag, so dass das Mähgerät sich derart selbst um den Drehpunkt drehen und in einer horizontalen Ebene nach hinten ausweichen kann.

Zum erneuten Einrasten der Verbindung zwischen Traktor und Mähgerät muss ersterer zurückfahren und die genannte Stange zurückschieben, bis der Klinkenmechanismus wieder einrastet. Aufgrund der Trennung durch die Überlastsicherung in Form einer einfachen horizontalen Klinkensicherung mit Anschlag kann - ohne Zurückfahren des Traktors - keine automatische Rückführung des Mähgeräts in die Arbeitsposition nach Überwinden eines Hindernisses erfolgen.

Der Erfindung liegt die Aufgabe zugrunde, unter Vermeidung der genannten Nachteile eine Überlast- oder Anfahrsicherung zu schaffen, die konstruktiv einfach und robust ausgebildet ist und bei der automatisch die Rückstellung des Arbeitsgerätes in seine vorgegebenen Betriebsstellung gegeben ist, wenn die durch ein Hindernis einwirkenden Kräfte entfallen.

Erfindungsgemäß wird die genannte Aufgabe bei einem Arbeitsgerät der eingangs genannten Art dadurch gelöst, dass der Schwenkarm am Anbaubock auch um eine horizontale Achse schwenkbar angelenkt ist und dass ein Lenker den Anbaubock und das horizontale Arbeitswerkzeug und/oder den Schwenkarm derart verbindet, dass der Lenker in Arbeitsgrundstellung des Werkzeugs weder eine vertikale noch eine horizontale Ebene mit dem Schwenkarm bildet.

Im Falle eines den Anbaubock mit dem Arbeitswerkzeug verbindenden Lenkers wird durch die Anordnung des als Parallellenker zum Schwenkarm wirkenden Lenkers in eine aus der durch den Schwenkarm gegebenen horizontalen Ebene vertikal herausgeschwenkten Stellung erreicht, dass bei Anlaufen des Arbeitswerkzeugs des Arbeitsgerätes gegen ein Hindernis eine entgegen der auf den Lenker ausgeübten Zugkraft auf das Arbeitswerkzeug wirkende und dieses in eine Schrägstellung zu seiner quer zur Fahrrichtung verlaufenden Arbeitsstellung versetzende Kraft erzeugt wird. Gleichzeitig wird - aufgrund der vertikalen Neigung der Lenkerstange - eine vertikale Kraftkomponente generiert, die bewirkt, dass das Arbeitswerkzeug angehoben und gleichzeitig verschwenkt wird und dadurch dem Hindernis ausweichen kann. Entsprechendes gilt im Falle eines den Anbaubock mit dem Schwenkarm verbindenden Lenkers mit dem Unterschied, dass der Lenker nicht als Parallellenker wirkt, sondern unmittelbar am Schwenkarm angreift, so dass das Arbeitswerkzeug gleichfalls angehoben und gleichzeitig verschwenkt wird, um dem Hindernis auszuweichen.

In einer bevorzugten erfindungsgemäßen Ausgestaltung ist aus Gründen einer möglichst geringen Reibung während des Verschwenkens des Arbeitsgeräts vorgesehen, dass eine den Schwenkarm und den Lenker verbindende Fläche zwischen 15° und 75°, vorzugsweise zwischen 20° und 70°, bezüglich der Horizontalen bzw. der Vertikalen geneigt ist

Der Schwenkarm und der Lenker sind insbesondere unter einem endlichen Winkel (Winkel ≠ 0) zueinander ausgerichtet, wobei der vertikale Winkel zwischen Schwenkarm und Lenker bevorzugt zwischen 30° und 45° beträgt.

Erfindungsgemäße Weiterbildungen sehen darüber hinaus vor, dass der Lenker am Anbaubock oberhalb des Schwenkarms angelenkt ist. Der Schwenkarm ist ferner vorzugsweise über einen Zugbock am Anbaubock angelenkt, wobei der Zugbock insbesondere um eine horizontale Achse relativ zum Anbaubock verschwenkbar ist.

Eine bevorzugte Ausführungsform sieht vor, dass der Lenker von einer starren, den Anbäubock und das Arbeitswerkzeug verbindenden Lenkerstange gebildet ist. Dabei ist die Lenkerstange vorzugsweise an ihrem dem Arbeitswerkzeug zugewandten Ende unterhalb des Schwenkarms mit dem Werkzeug verbunden, wobei die Lenkerstange insbesondere in einer im wesentlichen parallel zur Erstreckungsrichtung des Schwenkarms ausgerichteten senkrechten Ebene liegen kann. Auch die Lenkerstange ist vorzugsweise mittels eines mindestens zwei Schwenkachsen aufweisenden Gelenkteils am Anbaubock angelenkt, wobei insbesondere das Gelenkteil ein um eine horizontale Achse verschwenkbares Gehäuse aufweist, in der die Lenkerstange um eine senkrecht zur Erstreckungsrichtung der Lenkerstange verlaufende weitere Schwenkachse schwenkbar ist. Der um die horizontale Achse (um die A2-Achse) relativ zum Anbaubock verschwenkbare Zugbock trägt bevorzugt einen senkrecht zur Erstreckungsrichtung des Schwenkarms verlaufenden Schwenkbolzen, mittels dessen die Schwenkachse verschwenkbar ist (um die Achse A1).

Eine andere bevorzugte Ausführungsform sieht vor, dass der Lenker in Erstreckungsrichtung elastisch ausgebildet ist und den Anbaubock mit dem Schwenkarm verbindet. Der Lenker kann in diesem Fall beispielsweise als Schraubenfeder oder Fluidfeder, z.B. als Hydraulik- oder Pneumatikzylinder, ausgebildet sein. Bei Anlaufen des Arbeitswerkzeugs des Arbeitsgeräts gegen ein Hindernis wird auf diese Weise das Arbeitswerkzeug zunächst horizontal von dem Hindernis weg verschwenkt, bis die Federkraft des Lenkers so groß wird, dass das Arbeitswerkzeug auch angehoben wird. Dies geschieht bei Erreichen eines horizontalen Schwenkwinkels, bei dem die vertikale Kraftkomponente der Feder so groß wird, dass sie das Arbeitswerkzeug anhebt, um dem Hindernis auszuweichen. Im Gegensatz zur Ausführung mit starrer Lenkerstange erfolgt das Wegschwenken und Anheben des Arbeitswerkzeugs folglich nicht zwingend gleichzeitig.

Vorzugsweise ist der Lenker in Ruhestellung des Arbeitswerkzeugs in Richtung der Arbeitsgrundstellung desselben elastisch vorbelastet, um das Arbeitswerkzeug nach Umfahren eines Hindernisses wieder in die Arbeitsgrundstellung zu bringen. Ferner ist der elastische Lenker in Arbeitsgrundstellung des Arbeitswerkzeugs bevorzugt geringfügig gedehnt bzw. leicht zugbeansprucht, um das auf den Schwenkarm wirkende Gewicht des Arbeitswerkzeugs zu reduzieren und das Anheben und Verschwenken des Arbeitswerkzeugs beim Auffahren auf ein Hindernis zu erleichtern. Der Befestigungspunkt des Lenkers an dem Schwenkarm und/oder an dem Anbaubock ist vorzugsweise verstellbar, wobei die Befestigungspunkte des Lenkers an dem Schwenkarm und/oder an dem Anbaubock durch in Lochleisten am Schwenkarm und/oder am Anbaubock eingreifende, im wesentlichen horizontal angeordnete Bolzen gebildet sein können. In Weiterbildung ist vorgesehen, dass der um die horizontale Achse relativ zum Anbaubock verschwenkbare Zugbock einen im wesentlichen senkrecht zur Erstreckungsrichtung des Schwenkarms verlaufenden Schwenkbolzen trägt, dessen Schwenkwinkel durch eine Begrenzungseinrichtung einstellbar ist. Letztere ist bevorzugt von einem im Bereich der dem Anbaubock zugewandten Seite des Schwenkarms bezüglich diesem seitlich versetzt und senkrecht angeordneten Führungsbolzen gebildet, welcher in einem zur Schwenkachse des Schwenkarms bezüglich diesem seitlich versetzt und senkrecht angeordneten Langloch einer mit dem Anbaubock verbundenen, im wesentlichen senkrecht zur Schwenkachse des Schwenkarms angeordneten Führungsplatte geführt ist.

In weiterer bevorzugter Ausgestaltung ist vorgesehen, dass das Arbeitswerkzeug an dem dem Anbaubock abgewandten Ende des Schwenkarms drehbar gelagert ist, wobei das Arbeitsgerät insbesondere über ein Zwischengelenkteil um eine parallel zur Erstreckungsrichtung des Schwenkarms gerichtete Drehachse drehbar ist.

Da das Arbeitswerkzeug grundsätzlich über den Schwenkarm vom Fahrzeug getragen wird, kann in Weiterbildung auch vorgesehen sein, dass das Arbeitswerkzeug mit Stützteilen versehen ist, wobei ein solches Stützteil eine Kufe, eine Rotationskufe, ein Rad, eine Rolle oder eine Walze sein kann.

Weitere Vorteile und Merkmale der Erfindung ergeben sich aus den Ansprüchen und aus den nachfolgenden Zeichnungen, in der die Erfindung anhand von Ausführungsbeispielen unter Bezugnahme auf die Zeichnungen im einzelnen erläutert ist. Dabei zeigt bzw. zeigen:
- Fig. 1: eine teilweise geschnitten dargestellte Seitenansicht einer Ausführungsform eines erfindungsgemäßen Arbeitsgerätes zum Anbau an ein Fahrzeug;
- Fig. 2: eine perspektivische Detailansicht der Anlenkung von Schwenkarm und Lenkerstange am Anbaubock des Arbeitsgerätes gemäß Fig.1;
- Fig. 3a bis 3c: das Arbeitsgerät gemäß Fig. 1 und 2 mit Fahrzeug in einem hinter dieser eingeschwenkten Stellung in Rückansicht (Fig. 3a), Seitenansicht (Fig. 3b) und Draufsicht (Fig. 3c);
- Fig. 4a bis 4c: das Arbeitsgerät gemäß Fig. 1 und 2 mit Fahrzeug in einer hinter diesem ausgeschwenkten Stellung in Rückansicht (Fig. 4a), Seitenansicht (Fig. 4b) und Draufsicht (Fig. 4c) ;
- Fig. 5a bis 5c: das Arbeitsgerät gemäß Fig. 1 und 2 mit Fahrzeug in ausgeschwenkter Stellung beim Auffahren auf ein Hindernis in Rückansicht (Fig. 5a), Seitenansicht (Fig. 5b) und Draufsicht (Fig. 5c);
- Fig. 6a bis 6c: das Arbeitsgerät gemäß Fig. 1 und 2 mit Fahrzeug in so weit zurückgewichener Stellung, dass nach dem Auffahren auf ein Hindernis ein Vorbeibewegen an diesem möglich ist in Rückansicht (Fig. 6a), Seitenansicht (Fig. 6b) und Draufsicht (Fig. 6c);
- Fig. 7a und 7b: Seitenansichten der Tragkonstruktion für das Arbeitswerkzeug in seitlich ausgeschwenkter Arbeitsgrundstellung (Fig. 7a) und in aus dieser Position nach oben verschwenkter Ausweichstellung bei Anlaufen an ein Hindernis (Fig. 7b);
- Fig. 8a und 8b: Draufsichten entsprechend den Fig. 7a - ausgeschwenkte Arbeitsgrundstellung - und Fig. 7b - aus dieser Position herausgeschwenkte Ausweichstellung -;
- Fig. 9: eine perspektivische Darstellung einer Zwischenstellung des Ausweichens beim Anlaufen an ein Hindernis entsprechend den Fig. 3b und 4b;
- Fig. 10a bis 10c: perspektivische Darstellungen eines an einem Fahrzeug angebrachten Arbeitsgeräts beim Auffahren auf ein Hindernis (Fig. 10a) und gegenüber diesem ausweichend (Fig. 10b, 10c);
- Fig. 11: eine Seitenansicht einer anderen Ausführungsform eines erfindungsgemäßen Arbeitsgerätes zum Anbau an ein Fahrzeug;
- Fig. 12: eine Draufsicht auf das Arbeitsgerät gemäß Fig. 11 in Arbeitsgrundstellung und
- Fig. 13: eine Rückansicht des Arbeitsgeräts gemäß Fig. 11 und 12.

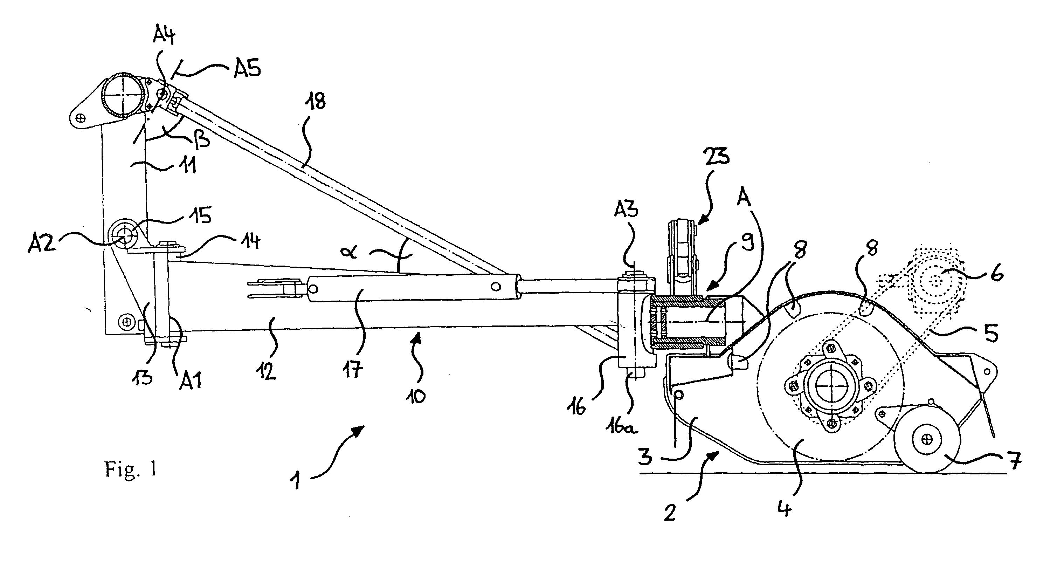

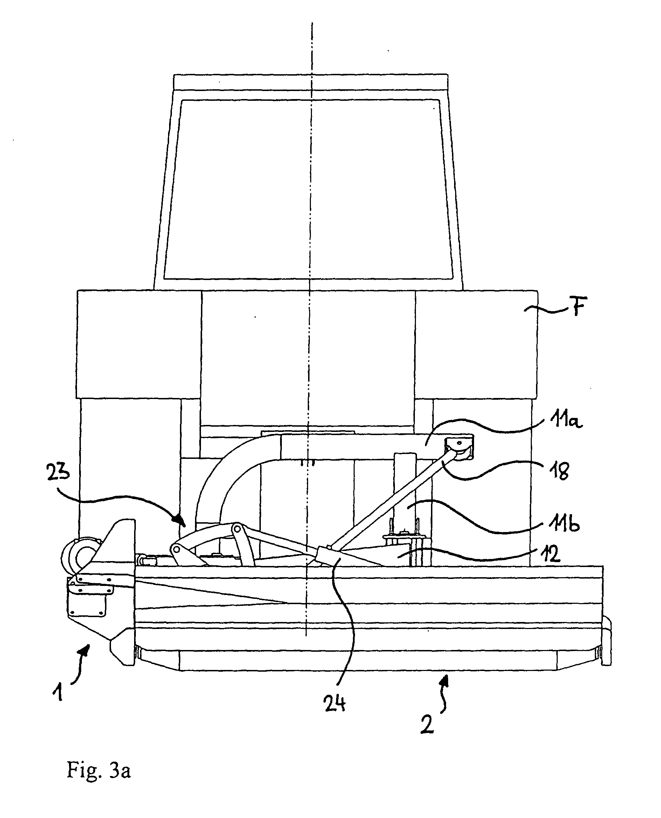

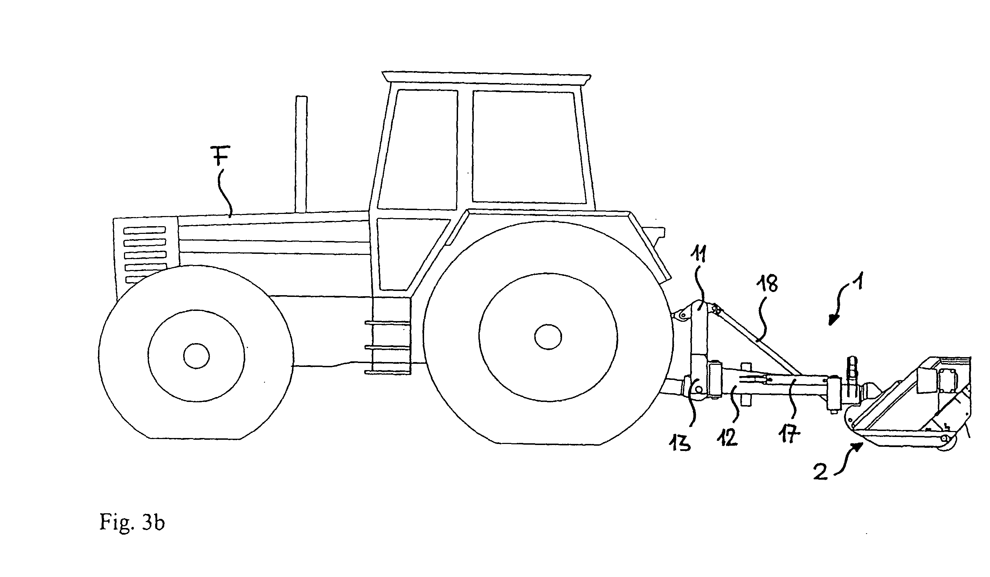

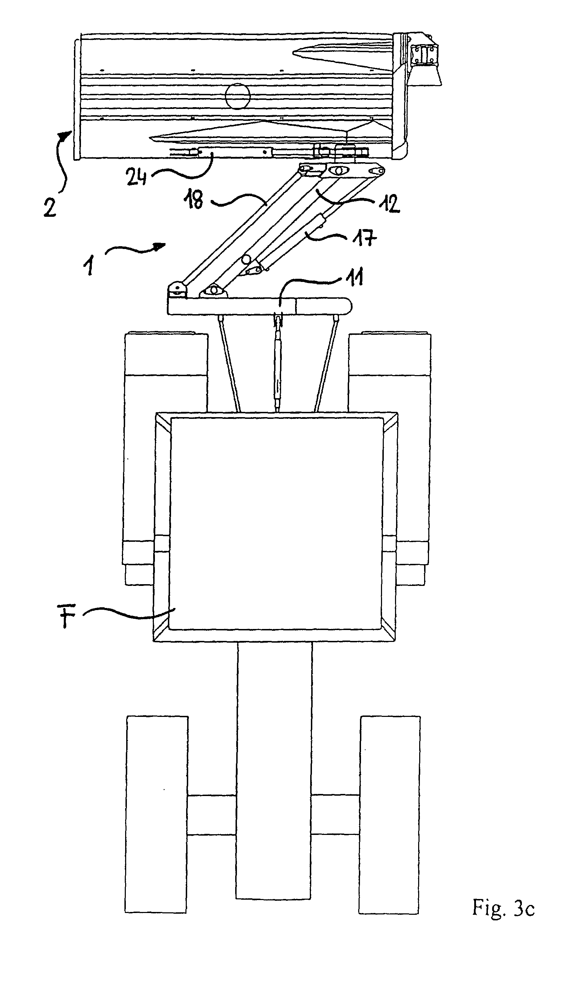

Die Fig. 1 stellt eine Ausführungsform eines erfindungsgemäßen Arbeitsgeräts 1 zum Anbau an ein Fahrzeug F (Figuren 3 bis 6, 10) als solches dar.

Das Arbeitsgerät 1 weist im dargestellten Ausführungsbeispiel ein Arbeitswerkzeug 2 in Form eines Mulchers auf. Das Arbeitswerkzeug kann grundsätzlich auch ein Mäher, eine Bodenfräse oder dergleichen sein. Das Arbeitswerkzeug 2 weist ein Gehäuse 3 auf, in welchem ein Rotor 4, hier ein Mulchrotor, gelagert ist. Der Rotor 4 wird über einen Riementrieb 5 von einem Antrieb 6 angetrieben. Der Antrieb 6 ist auf oder neben dem Gehäuse 3 angeordnet. Der Antrieb 6 kann alternativ auch hydraulisch, pneumatisch, elektrisch oder verbrennungsmotorisch erfolgen.

Zur Abstützung des Arbeitswerkzeugs 2 auf dem Boden ist in der Regel - wenn auch nicht notwendigerweise - ein Stützteil 7, hier in Form einer Walze vorgesehen; statt dessen kann das Stützteil 7 auch eine Kufe, eine Rotationskufe, eine Rolle oder eine Walze sein. Zur Verkleinerung des durch den Mulchrotor abgeschnittenen Mähgutes können am Gehäuse stationäre Häckselkämme 8 vorgesehen sein, die sich über die Länge des Rotors 4 erstrecken.

Das Arbeitswerkzeug 2 ist über ein Zwischengelenkteil 9 an einer Tragkonstruktion 10 mit einer in Normalbetriebs- und Transportposition horizontalen Achse A zwischen den beiden genannten Stellungen verschwenkbar angelenkt. Die Verschwenkung kann über einen Hydraulikzylinder (z.B. Fig. 3a) erfolgen.

Die Tragkonstruktion 10 weist einen Anbaubock 11 zum Anbau des Arbeitsgeräts 1 an einem Fahrzeug auf. Der Anbaubock 11 ist in der Regel ein Dreipunkt-Bock mit (im dargestellten Ausführungsbeispiel) einem zweischenkligen, gebogenen Bügel mit einer senkrecht zum horizontalen Schenkel 11a verlaufenden Strebe 11b (Fig. 3a ff). Der Anbaubock 11 ist mit dem Fahrzeug starr verbindbar. Das Arbeitswerkzeug 2 ist mit dem Anbaubock 11 über einen Schwenkarm 12 verbunden, der derart ausgebildet sein kann, dass er das Arbeitswerkzeug 2 trägt.

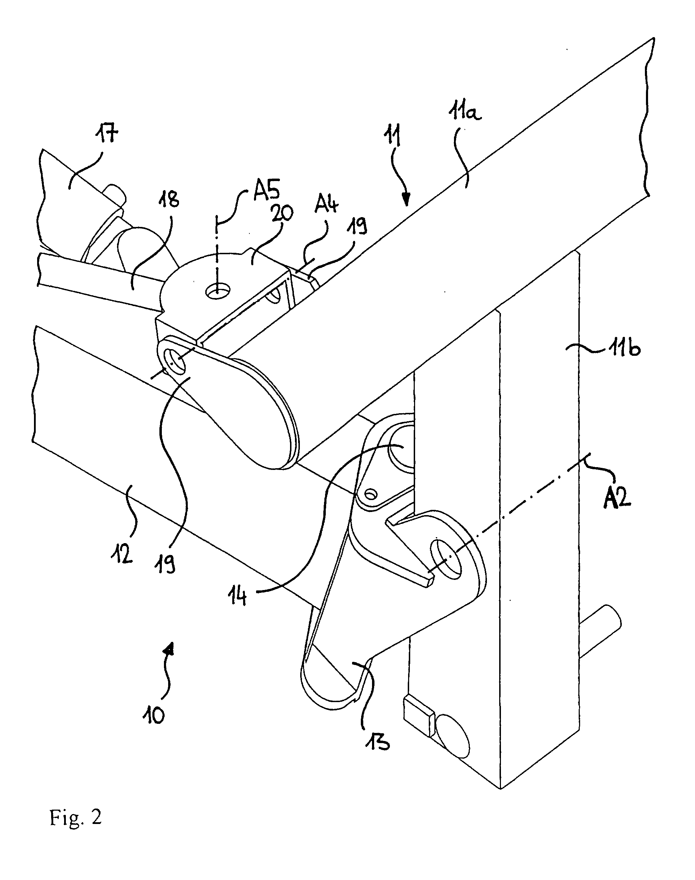

Die Verbindung des Schwenkarms 12 mit dem Anbaubock 11 an dessen Strebe 11b (Fig. 2) erfolgt erfindungsgemäß in bevorzugter Ausgestaltung über einen Zugbock 13, an dem der Schwenkarm 12 über eine bei auf ebenem, horizontalen Boden befindlichen Fahrzeug vertikale Achse A1 mittels eines in Erstreckungsrichtung der Achse A1 verlaufenden Schwenkbolzens 14 verschwenkbar ist.

Der Zugbock 13 ist seinerseits am Anbaubock 11 über eine Drehwelle 15 mit horizontal verlaufender Drehachse A2 angelenkt.

Weiterhin ist der Schwenkarm 12 über einen Schwenkbolzen 16a um eine (in Arbeitsgrundstellung) vertikale Schwenkachse A3 (mit entsprechendem Schwenkbolzen) an einem starr mit dem dem Schwenkarm 12 zugewandten Teil des Zwischengelenkteils 9 verbundenen Schwenkbock 16 angelenkt.

Es ist weiterhin ein Schwenkzylinder 17 vorgesehen, der einerseits am Schwenkarm 12, andererseits am Schwenkbock 16, und zwar mit horizontalem Abstand zur Anlenkstelle des Schwenkarms 12 am Schwenkbock 16 angelenkt ist. Die Verkürzung oder Verlängerung seiner Kolbenstange geschieht nur durch bewusste Betätigung des zugehörigen Hydraulikventils vom Zugfahrzeug F her, um das Arbeitswerkzeug 2 seitlich zwischen den gewünschten Arbeitspositionen zu verschieben. Bei einmal gewählter Arbeitsposition bleibt die Zylinder-Kolben-Länge während des Arbeitens - auch bei einer Ausweichbewegung - fest und damit auch der Abstand seiner Anlenkenden.

Die Tragkonstruktion 10 weist weiterhin einen Lenker 18 in Form einer starren Lenkerstange auf, die den Anbaubock 11 und das Arbeitswerkzeug 2 verbindet und in normaler Arbeitsstellung der Tragkonstruktion 10 in einer parallel zum Schwenkarm 12 bzw. dessen Seitenwänden parallelen Vertikalebene verläuft. Die Lenkerstange 18 erfüllt die Funktion eines Parallellenkers (zum Schwenkarm 12) und bildet mit dem Schwenkarm 12 sowie Anbaubock 11 und Schwenkbock 16 ein schwenkbares Parallelogramm, wobei sie mit dem Schwenkarm 12 einen endlichen Winkel α begrenzt. Sie verläuft aber nicht in einer (horizontalen oder vertikalen) Ebene mit dem Schwenkarm 12 bzw. bildet nicht zusammen mit diesem eine Ebene. Die Lenkerstange 18 ist vielmehr am Anbaubock 11 oberhalb des Schwenkarms 12 über einen endlichen Winkel β angelenkt und zwar verschwenkbar um eine horizontale Achse A4 und eine senkrecht zu dieser, senkrecht zur Erstreckungsrichtung der Lenkerstange 18 verlaufenden Drehachse A5. Im dargestellten Ausführungsbeispiel ist die Lenkerstange 18 am Schwenkbock 16 horizontal versetzt zum Schwenkarm 12 an einem Anlenkpunkt unterhalb des Schwenkarmes 12 angelenkt.

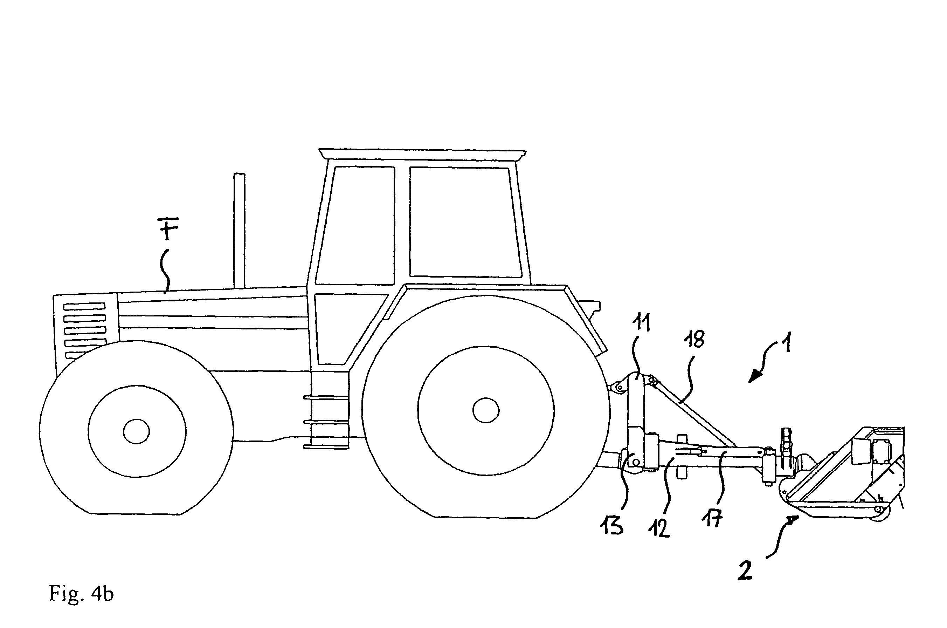

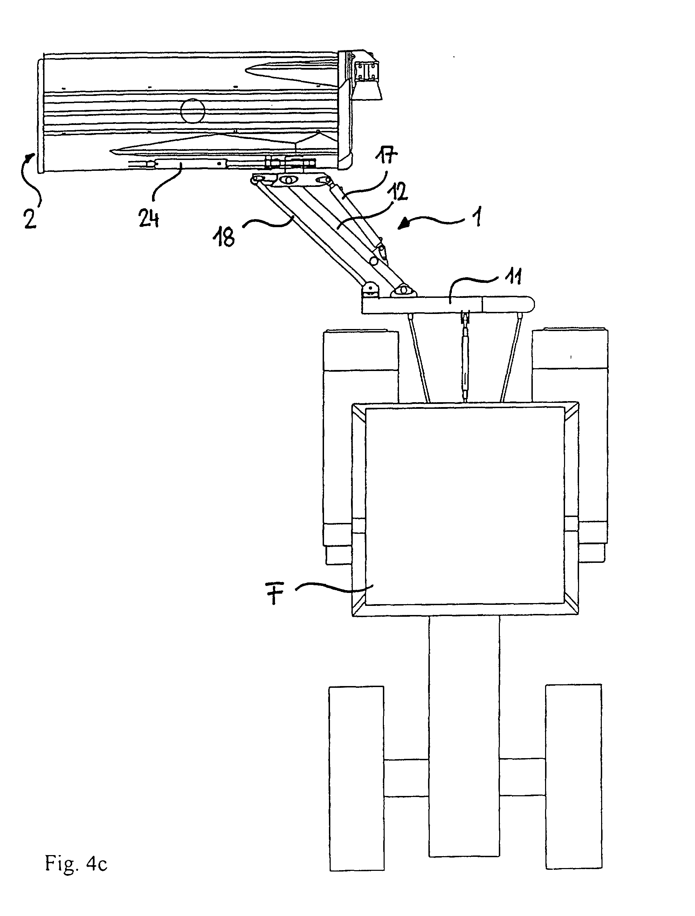

Es ist weiterhin eine einen Schwenkzylinder 24 (z.B. Fig. 4b) aufweisende, an sich bekannte Schwenkeinrichtung 23 angedeutet, die zum Verschwenken des Arbeitswerkzeugs 2 aus der (horizontalen) Arbeitsstellung in eine vertikale Transport- und Ruhestellung dient.

In Arbeitsstellung kann der Mulchrotor - bei Mäharbeiten in der Ebene - sowohl parallel zur Flächennormalen der Seitenwände des Schwenkarms 12 angeordnet sein als auch eine Neigung zu dieser Flächennormale aufweisen - bei Mäharbeiten an Böschungen, Hecken oder Gräben -.

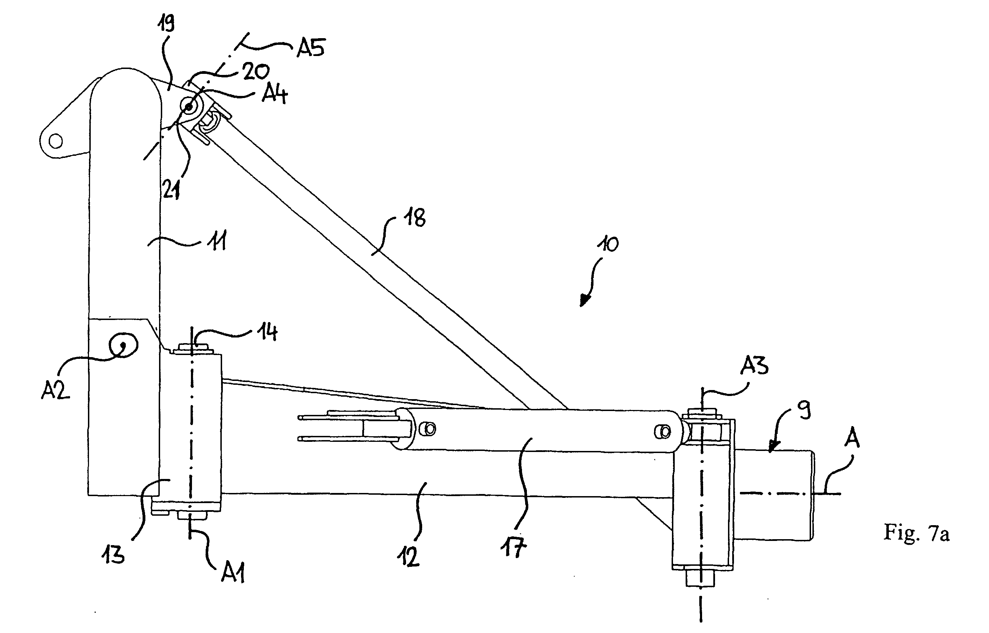

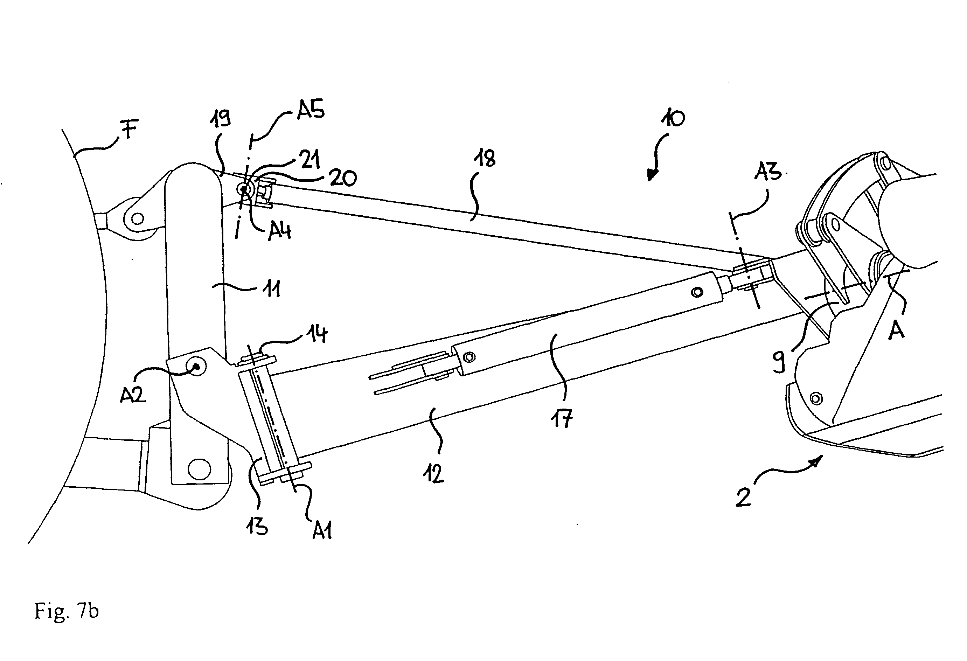

Die Fig. 2 zeigt Details der Anlenkung von Schwenkarm 12 und Lenkerstange 18 am horizontalen Schenkel 11a des Anbaubocks 11 in leicht hochgeschwenkter Stellung. Die Seitenwände des Schwenkarms 12 bleiben dabei immer vertikal ausgerichtet (bzw. genauer senkrecht zur Fahrebene des Fahrzeugs). Mittels zweier Ösen 19, die am Schenkel 11a befestigt sind, ist ein Anlenkgehäuse 20 mittels einer horizontal gerichteten Drehwelle 21 (Fig. 7a, b) um die Achse A4 am Schenkel 11a schwenkbar. Die Lenkerstange 18 wiederum ist mittels eines Schwenkbolzens (nicht dargestellt), der senkrecht zur Achse A4 und zur Einsteckungsrichtung der Lenkerstange 18 ausgerichtet ist, am Gehäuse 20 um die A5-Achse verschwenkbar angelenkt.

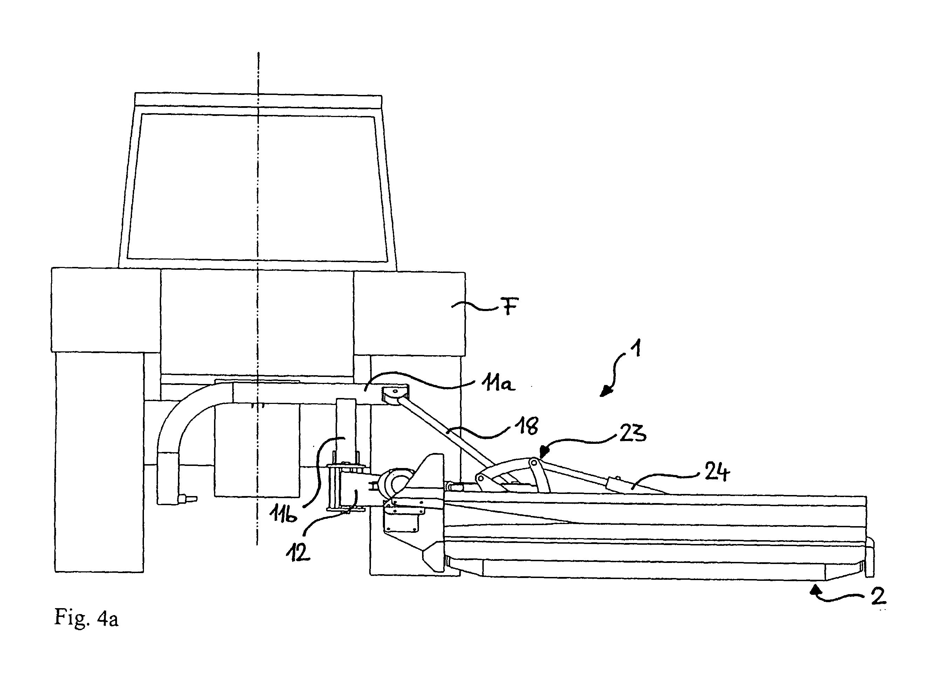

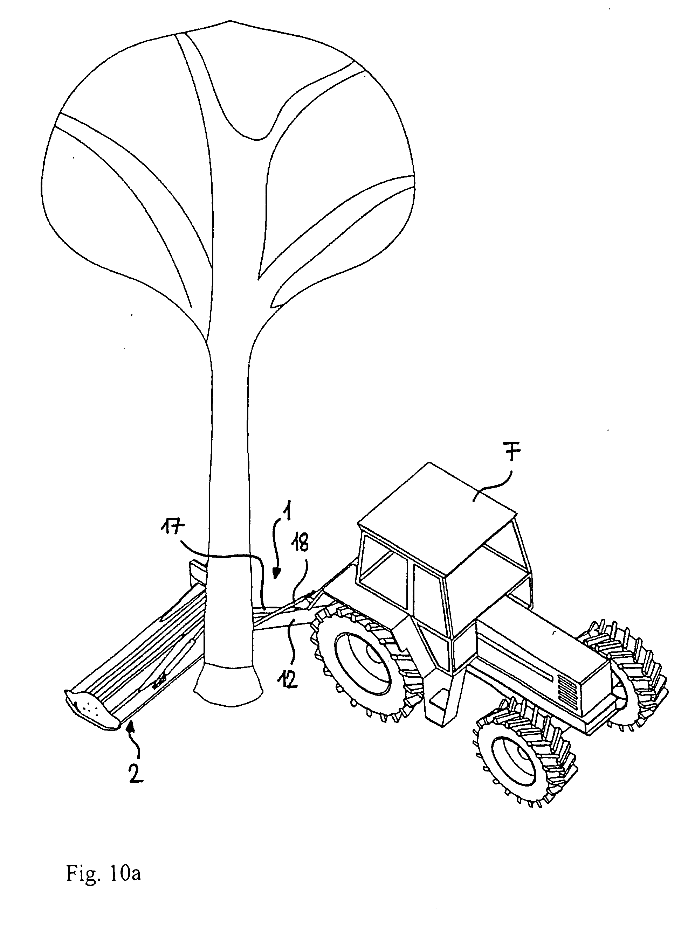

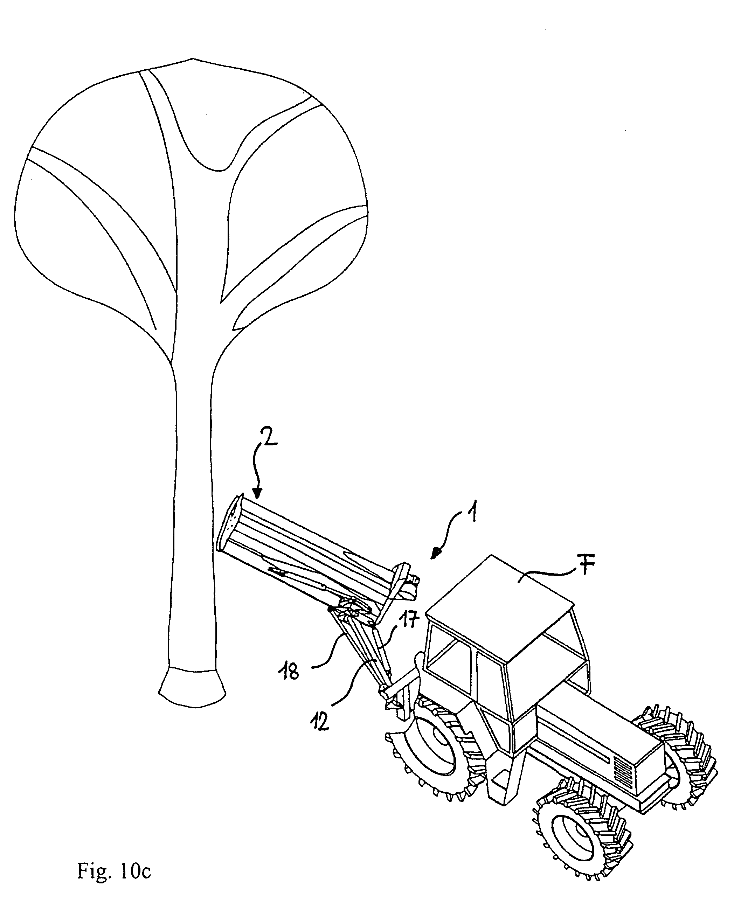

Das erfindungsgemäße Arbeitsgerät 1 lässt sich in an sich bekannter Weise aus einer ersten Arbeitsposition nahezu hinter dem ziehenden Fahrzeug F, wie sie in den Figuren 3a bis 3c dargestellt ist, in eine seitliche ausgeschwenkte Arbeitsposition mit einem Arbeitsbereich seitlich rechts neben dem Fahrzeug verschwenken, wie dies in den Figuren 4a bis 4c sowie 10a dargestellt ist.

In dieser ausgeschwenkten Arbeitsposition der Figuren 4a bis 4c besteht die Gefahr, dass das Arbeitswerkzeug 2 gegen ein Hindernis (nicht dargestellt) anläuft, wie typischerweise einen Grenzstein, der durch hochgewachsenes Gras verdeckt ist, aber auch sonstige größere Steine, Stangen oder dergleichen.

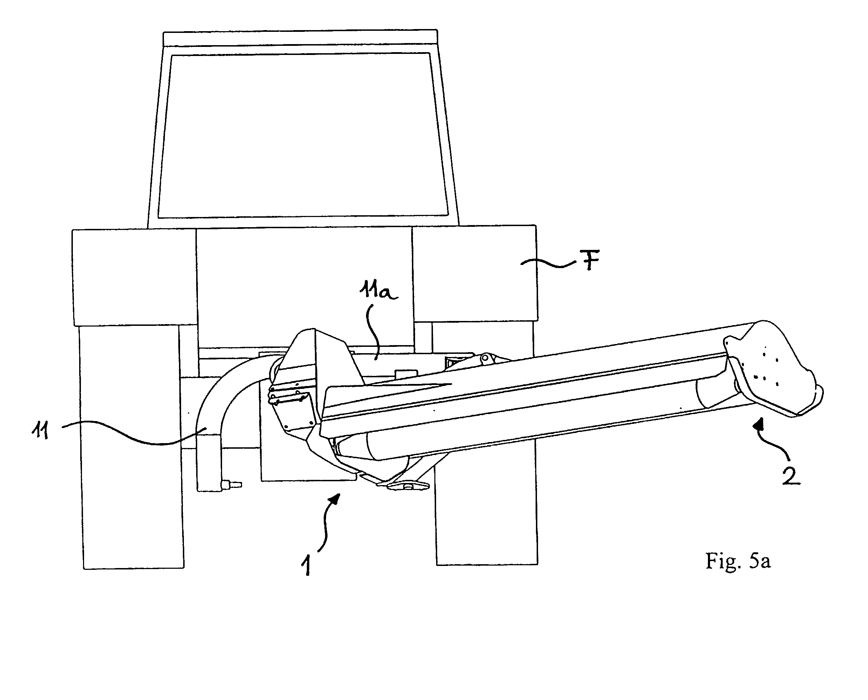

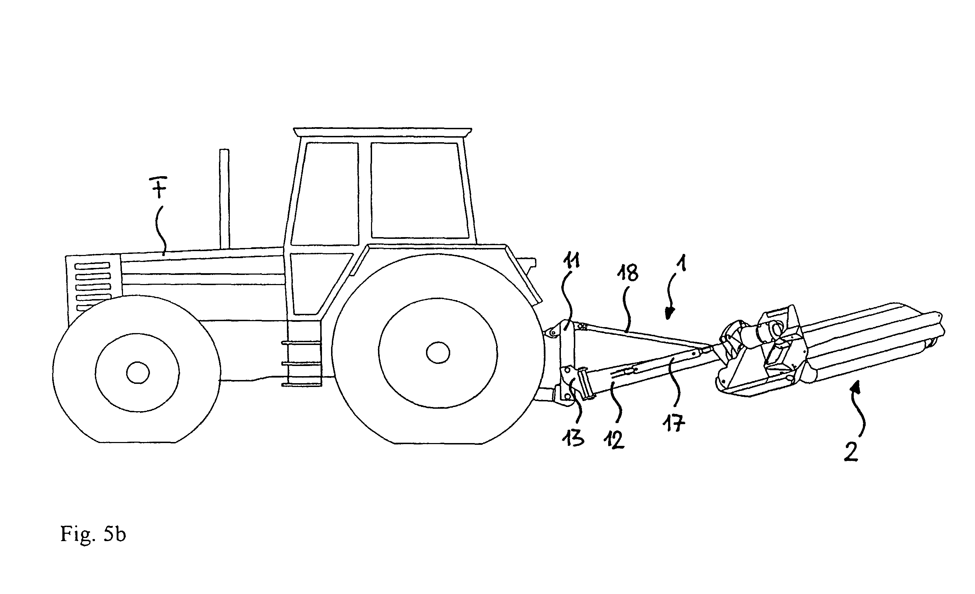

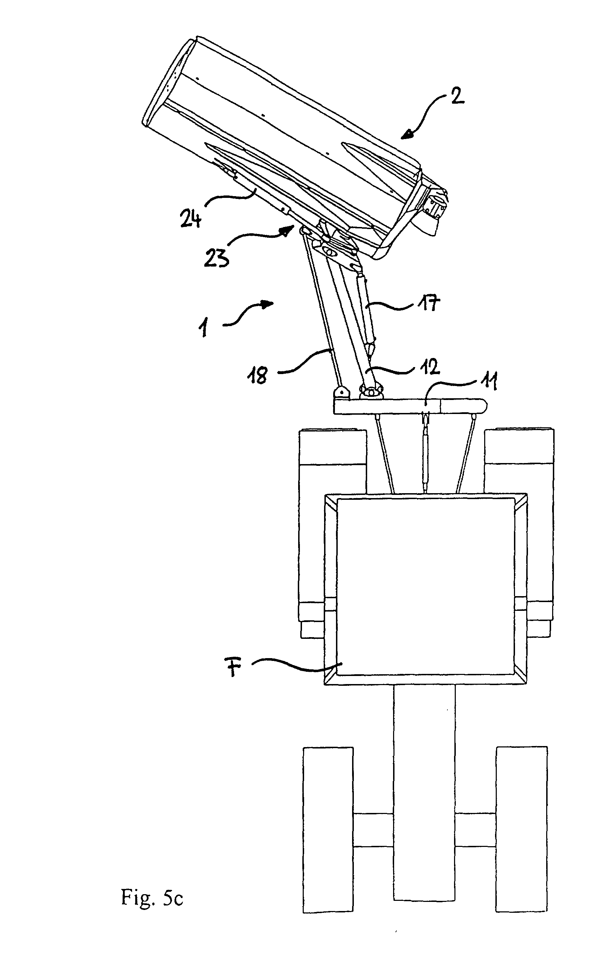

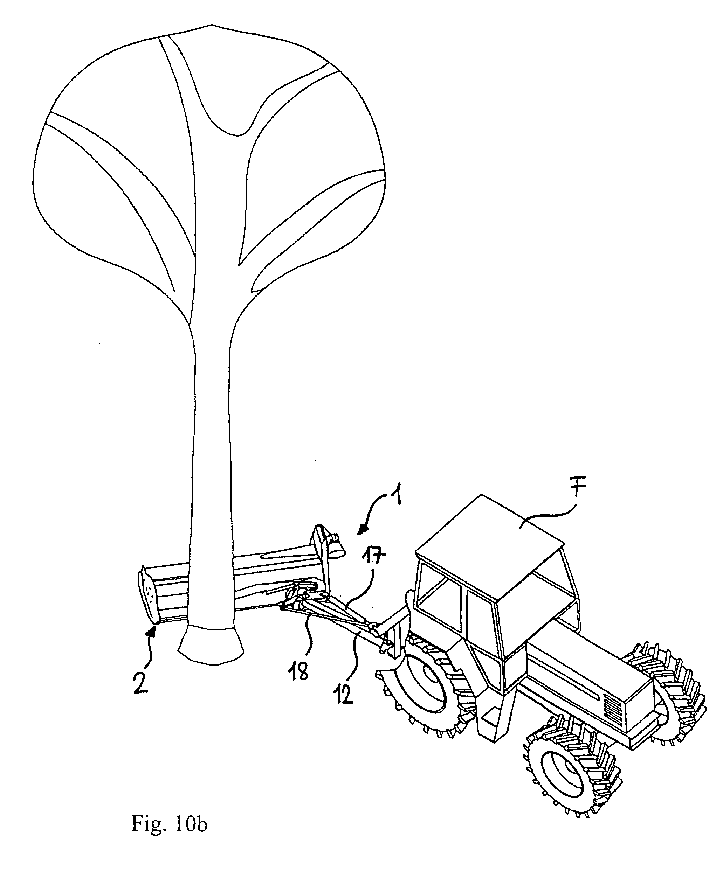

Durch die erfindungsgemäße Ausgestaltung des Arbeitsgerätes 1, insbesondere die aus einer Ebene im Schwenkarm 12 herausgehobene Lenkerstange 10, wird eine Überlastsicherung geschaffen: Wenn das Arbeitswerkzeug 2 gegen ein solches Hindernis fährt, werden die auftretenden Kräfte (auch) auf die Lenkerstange 18 ausgeübt. Beim Fahren gegen das Hindernis wird das Arbeitswerkzeug 2 aus senkrecht zur Fahrrichtung verlaufenden Quererstreckung der Abbildung 4a bis 4c in eine Schrägposition gedrückt, wie sie in den Figuren 5a bis 5c sowie 10b dargestellt ist. Dabei erfolgt zeitgleich auch bereits ein Anheben des Arbeitswerkzeugs 2, da aufgrund der Anordnung des Lenkers sich beide Bewegungen zeitgleich überlagern.

Bei der Ausgleichsbewegung ist durch den in dieser Situation in der Länge konstanten Zylinder 17 am Schwenkarm 12 das Arbeitswerkzeug 2 in einer festen Verbindung zum Schwenkarm 12 eingespannt, wodurch die Rotationsbewegung des Arbeitswerkzeugs 2 ausgelöst wird. Die aus der Ausgleichsbewegung resultierenden Bewegungen überlagern sich zeitgleich.

Die Bewegung wird durch die beiden freien Schwenkachsen A2 (horizontal) und A1 (vertikal) der Befestigung des Schwenkarms 12 am Zugbock 13 ermöglicht. Da die beiden Achsen A1, A2 hierbei etwas versetzt sind, ergibt sich durch die Überlagerung dieser beiden Bewegungen nur eine annähernde Kreisbahn. Würden sich die Achsen A1, A2 ideal schneiden, ergäbe sich während der Ausgleichsbewegung eine räumliche Kreisbewegung wie auf einer Kugel.

Da die Lenkerstange 18 nicht in einer Ebene mit dem Schwenkarm 12 liegt und nicht horizontal ausgerichtet ist, sondern eine vertikale Erstreckungskomponente aufweist, bewirkt diese ein Verschwenken des Arbeitswerkzeugs 2 nach hinten und gleichzeitig ein Anheben der Lenkerstange 18 am Lenkbereich am Schwenkbock 16 und damit ein schräges Anheben des Arbeitswerkzeugs 2 zur Reduzierung der Vertikalkomponente der Lenkerstange 18 (durch dieses Anheben am rückwärtigen Ende), die so in ihrer Horizontalkomponente verlängert wird und damit Raum für die genannte, räumliche Schrägstellung des Arbeitswerkzeugs 2 geben kann. Dabei ändert, wie gesagt, der Hydraulikzylinder 17 seine Länge nicht, so dass sich auch der Abstand seiner Anlenkenden am Schwenkarm 12 und Schwenkbock 16 nicht ändert.

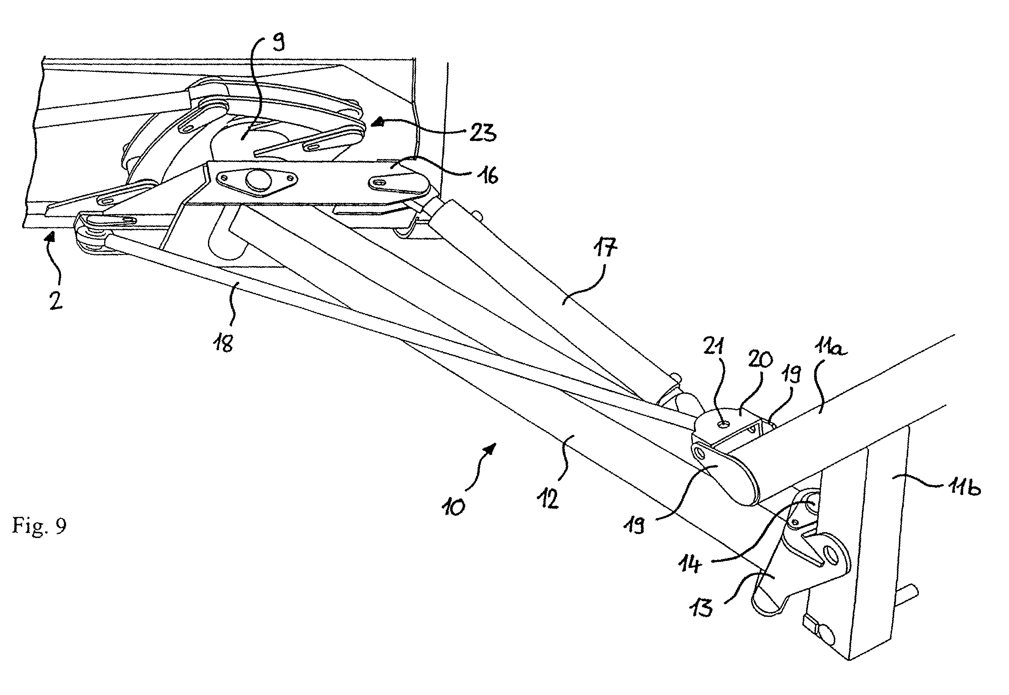

Das Arbeitswerkzeug 2 kann dabei so weit nach hinten und schräg nach oben verschwenken, dass es an einem Hindernis, an dem das Zugfahrzeug F vorbeigefahren ist, ebenfalls vorbeigeschwenkt wird, wie dies in den Figuren 9 sowie 10c dargestellt ist. Dabei wird der Schwenkarm 12 gleichzeitig mit dem Verschwenken um die Drehachse angehoben - und mit ihm das Arbeitswerkzeug 2 - und zusätzlich hinter das Fahrzeug zurückgeschwenkt.

Ist das Hindernis umfahren, fällt die auf das Arbeitswerkzeug ausgeübte Kraft des Hindernisses weg und damit auch die hierdurch bewirkte senkrechte Kraftkomponente, so dass das Arbeitswerkzeug 2 aufgrund seiner Masse in die Ausgangsposition (Figuren 3a bis 3c) zurückfällt.

Die Rückführbewegung kann durch eine Dämpfungskraft (wie z.B. Federn, Reibungsdämpfer, hydraulische Dämpfer, pneumatische Dämpfer, Gummipuffer) ganz oder teilweise begrenzt und/oder gedämpft werden.

Die Figuren 7a und 7b zeigen noch einmal das Verschwenken der Tragkonstruktion 10 beim Anlaufen des Arbeitswerkzeugs 2 an ein Hindernis und Ausweichen gegenüber diesem durch die erfindungsgemäße Ausgestaltung der Tragkonstruktion 10.

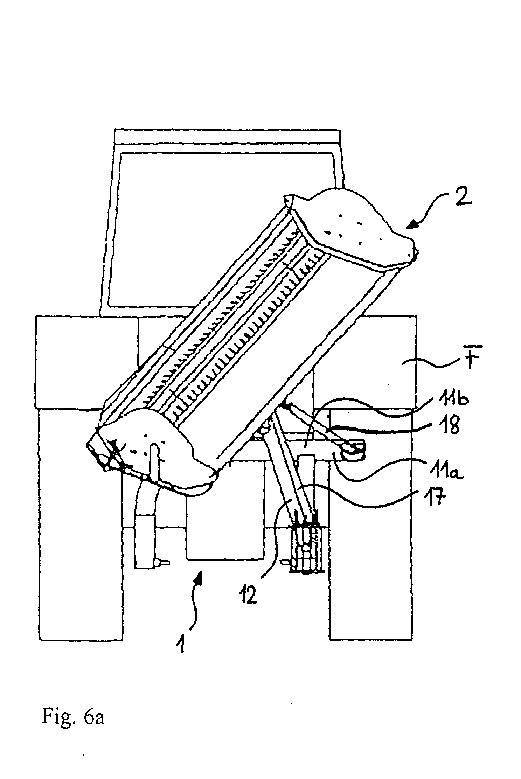

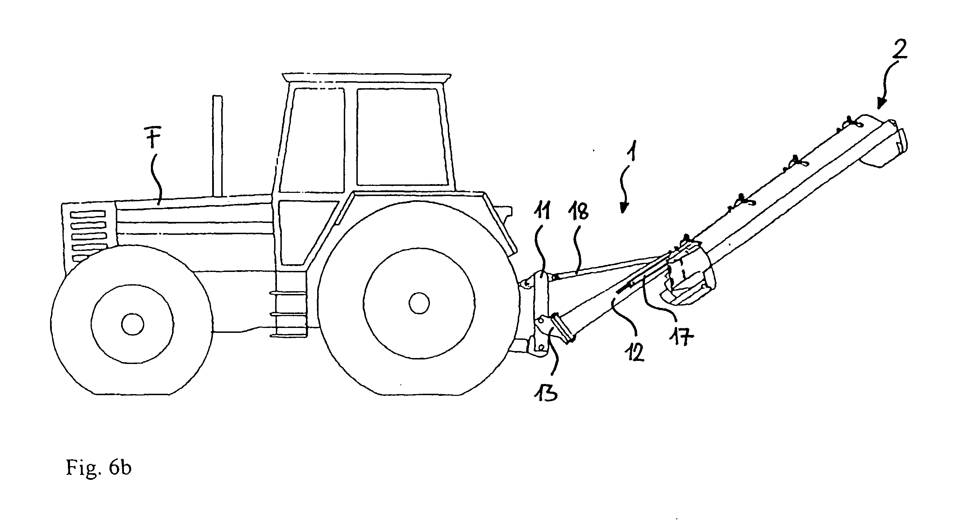

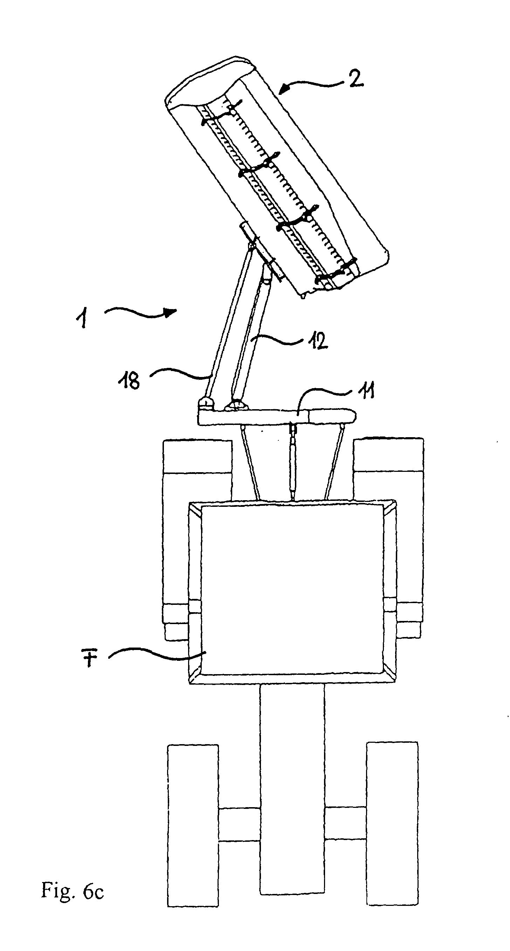

Fig. 7a zeigt dabei das erfindungsgemäße Arbeitsgerät bzw. genauer dessen Tragkonstruktion 10 ohne Arbeitswerkzeug 2 selbst in Seitenansicht in einer aus der eingeschwenkten Position der Fig. 3a bis 3c seitlich ausgeschwenkten Arbeitsstellung entsprechend der Fig. 4a bis 4c mit einer entsprechend praktisch sichtbaren Projektion der Tragkonstruktion auf eine vertikale Ebene durch die Fahrtrichtung des Fahrzeugs F, bei der Schwenkarm 12 und Lenkerstange 18 in dieser Projektion verkürzt erscheinen. Fährt nun das Arbeitswerkzeug 2 (Fig. 7b) gegen ein Hindernis an, so bewirkt die auftretende Kraft eine Verlängerung der Projektion von Schwenkarm 12 und Lenkerstange 18 in der vertikalen, durch die Fahrtrichtung laufenden Ebene, was nur durch ein Zurückverschwenken des Schwenkarms 12 aus der ausgeschwenkten Stellung in eine einen geringeren Winkel der Fahrtrichtung einschließende Stellung möglich ist, wie dies in der Fig. 7b dargestellt ist. Aufgrund der einerseits starren Parallelogrammverhältnisse zwischen Schwenkarm 12, Lenkerstange 18, Anbaubock 11 und Schwenkbock 16 sowie andererseits der nicht nur um die - in Arbeitsgrundstellung - vertikalen Achsen A1, A3 gegebenen Beweglichkeit, sondern der beweglichen Anlenkung um die horizontalen Achsen A2, A4 und der räumlichen, nicht in einer Länge liegenden Ausrichtung von Schwenkarm 12 und Lenkerstange 18 wird noch eine Zugkraft auf die Lenkerstange 18 ausgeübt, die aufgrund der zur horizontal geneigten Ausrichtung derselben auf deren Ende eine vertikale Kraftkomponente einwirken lässt, die diese verschwenkt und ihr werkzeugnahes Ende anhebt und dabei einerseits den um die horizontale Achse A4 schwenkbar gelagerten Schwenkarm 12 anhebt, andererseits das Werkzeug zusätzlich in eine Schrägstellung bringt (insbesondere Fig. 6a bis 7c, 10b, 10c).

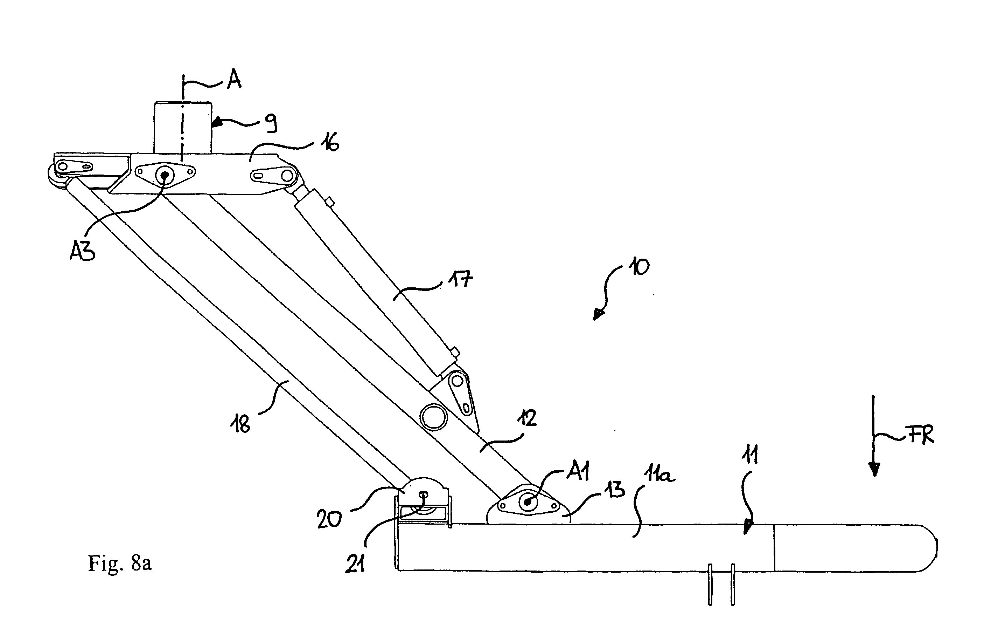

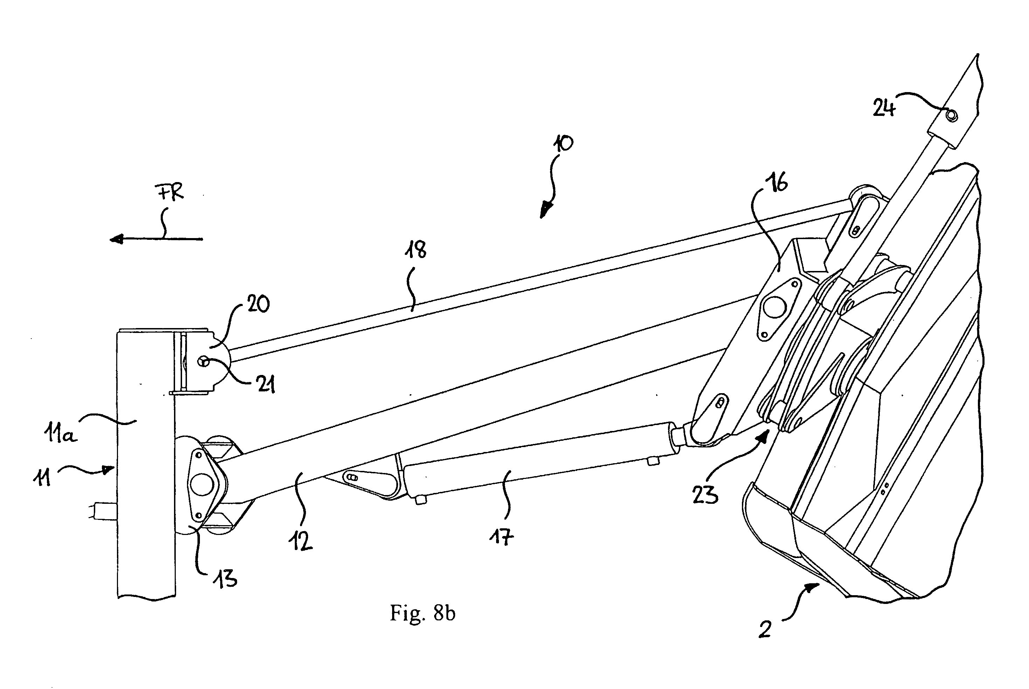

Die Fig. 8a und 8b zeigen den vorstehend beschriebenen Ausweichvorgang in der Vertikalposition. Die Fig. 8a zeigt zunächst in Draufsicht das in einer horizontalen Projektionsebene gegebene Parallelogramm von Schwenkarm 12, Lenkerstange 18, Anbaubock 11 und Schwenkbock 16 bei ausgeschwenkter Arbeitsgrundstellung des Arbeitswerkzeugs. Dabei ist ersichtlich, dass sich in der Projektion auf eine horizontale Projektionsebene (Blattebene) genau ein Parallelogramm ergibt. Die Fig. 8b zeigt nun die verschwenkte Stellung bei Anfahren des Werkzeugs 2 gegen ein Hindernis. Es ist ersichtlich, dass der Neigungswinkel sowohl von Schwenkarm 12 als auch Lenkerstange 18 zur Fahrtrichtung FR (die senkrecht zur Erstreckung des Anbaubocks 11 gerichtet ist) durch die auf das Werkzeug einwirkende Kraft im Rahmen der Ausweichbewegung reduziert ist und damit die in Fahrtrichtung liegenden Erstreckungskomponenten von Schwenkarm 12 und Lenkerstange 18 nicht vergrößert sind, wobei das Arbeitswerkzeug 2 nicht nur aus seiner senkrecht zur Fahrtrichtung gegebenen Arbeitsgrundstellung mit seinem freien Arm schräg nach hinten verschwenkt ist, sondern ebenfalls mit seinem freien Ende aus der Horizontalen schräg nach oben verschwenkt ist, was dadurch erkennbar ist, dass das Parallelogramm den Schwenkarm 12, Lenkerstange 18, Anbaubock 11 und Schwenkbock 16 nicht mehr als Parallelogramm in der dargestellten Position auf einer horizontalen Ebene darstellt, sondern sich in dieser Projektion im Bereich des Werkzeugs 2 verjüngt, was bedeutet, dass gegenüber der Arbeitsgrundstellung das werkzeugnahe Ende der Lenkerstange 18 gegenüber dem werkzeugnahen Ende des Schwenkarms 12 angehoben sein muss (da die Lenkerstange 18 am Anbaubock 11 höher, d.h. mit größerem Bodenabstand angelenkt ist, als der Schwenkarm 12).

Die beim Anlaufen an ein Hindernis zunächst gegebene leicht ausgeschwenkte Stellung des Arbeitswerkzeugs 2 ist in perspektivischer Darstellung noch einmal in Fig. 9 dargestellt. Wesentlich ist, dass bei diesem Ausweichen beim Anlaufen an einem Hindernis die Zylinder 17, 24 ihre Länge nicht grundsätzlich verändern, insbesondere nicht betätigt werden, sondern den Anstoßvorgang des Werkzeugs an das Hindernis bestenfalls federartig abdämpfen.

Die Figuren 10a bis 10c zeigen noch einmal in perspektivischen Darstellungen den Ablauf des Verschwenkens des Arbeitswerkzeugs beim Anfahren an ein hier dargestelltes Hindernis H.

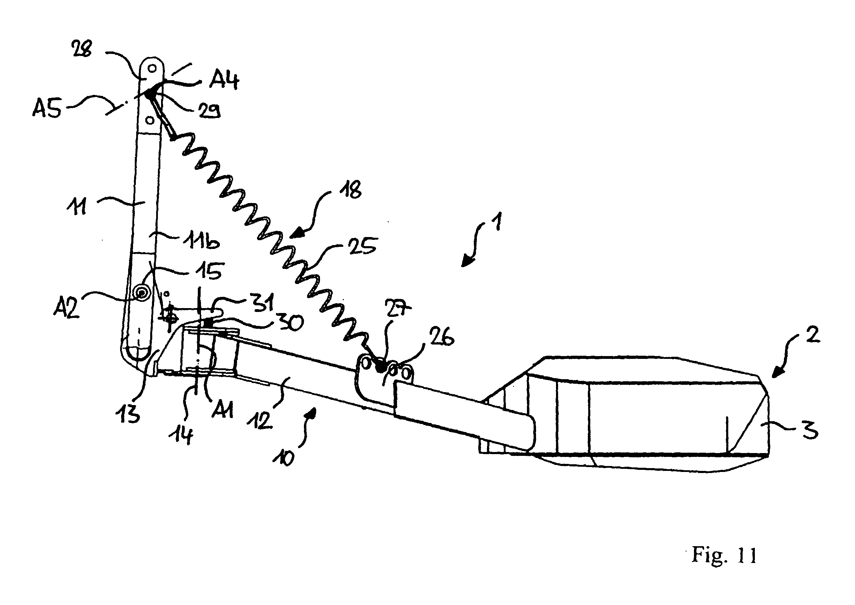

Die in den Fig. 11 bis 13 dargestellte Ausführungsform eines erfindungsgemäßen Arbeitsgeräts 1 unterscheidet sich von der Ausführungsform gemäß Fig. 1 bis 10 insbesondere dadurch, dass der Lenker 18 in Erstreckungsrichtung elastisch ausgebildet ist und den Anbaubock 11 unmittelbar mit dem Schwenkarm 12 verbindet, wobei die von dem Anbaubock 11 und dem Schwenkarm 12 gebildete Ebene weder horizontal noch vertikal, sondern geneigt ist. Der Lenker 18 ist beim gezeigten Ausführungsbeispiel von einer Schraubenfeder 25 gebildet; alternativ ist z.B. auch ein Fluidzylinder bzw. eine Fluidfeder denkbar. In Ruhe- bzw. zurückgewichener Stellung des Arbeitswerkzeugs 2 (vgl. Fig. 6a bis 6c) ist das Arbeitswerkzeug 2 durch den Lenker 18 in Richtung der in Fig. 11 bis 13 gezeigten Arbeitsgrundstellung vorbelastet, um ein selbsttätiges Zurückschwenken des Arbeitswerkzeugs 2 nach Umfahren eines Hindernisses zu garantieren. In der gezeigten Arbeitsgrundstellung ist die Schraubenfeder 25 des Lenkers 18 hingegen geringfügig gedehnt, um den Schwenkarm 12 in der Arbeitsgrundstellung zu entlasten und das Zurückweichen des Arbeitswerkzeugs 2 bei Auffahrt auf ein Hindernis zu erleichtern.

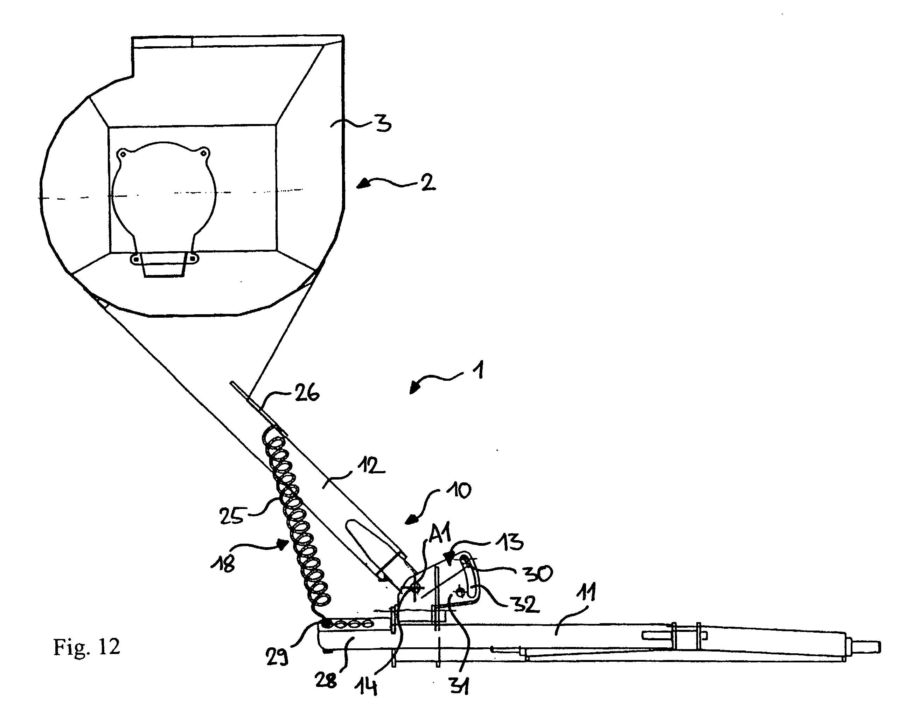

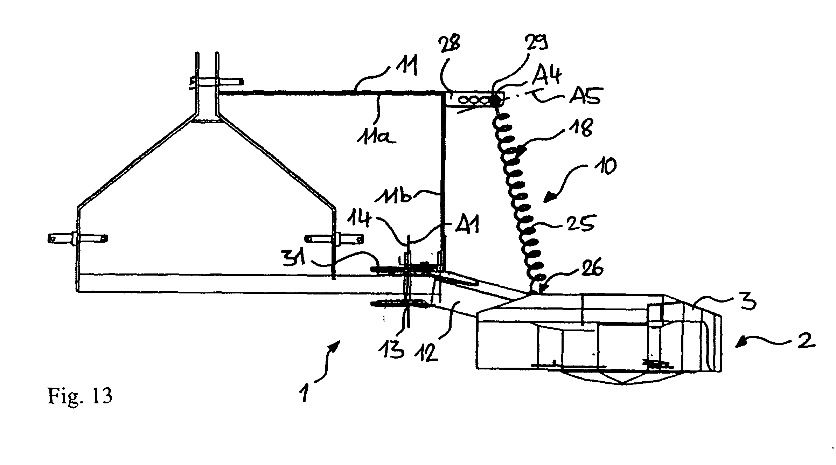

Die Anlenkung des elastischen Lenkers 18 am Schwenkarm 12 geschieht mittels eines in eine seitlich am Schwenkarm 12 angeordnete Lochleiste 26 eingreifenden Bolzens 27 (vgl. insbesondere Fig. 11), wobei die Auswahl der für den Bolzen 27 vorgesehenen Öffnung der Lochleiste 26 je nach Gewicht des Arbeitswerkzeugs 2 bzw. des auf den Schwenkarm 12 wirkenden Drehmoments erfolgen kann. Entsprechend ist der Lenker 18 an seiner dem Schwenkarm 12 abgewandten Seite mittels eines in eine den horizontalen Schenkel 11a des Anbaubocks 11 nach oben (Fig. 11) oder in Erstreckungsrichtung desselben (Fig. 12, 13) verlängernde Lochleiste 28 eingreifenden Bolzens 29 unter Gewährleistung der Verschwenkbarkeit sowohl um die A4- als auch um die A5-Achse angelenkt.

Die Verbindung des Schwenkarms 12 mit dem Anbaubock 11 geschieht entsprechend der Ausführungsform mit starrer Lenkerstrange gemäß Fig. 1 bis 10 über einen Zugbock 13, an dem der Schwenkarm 12 um eine - bei auf ebenem Boden befindlichen Fahrzeug - vertikale Achse A1 mittels eines Schwenkbolzens 14 verschwenkbar ist, wobei der Zugbock 13 seinerseits am Anbaubock 11 über eine Drehwelle 15 mit horizontal verlaufender Drehachse A2 angelenkt ist (Fig. 11). Darüber hinaus ist zur Begrenzung der Schwenkbewegung des Schwenkarms 12 zwischen seiner Ruhe- und seiner Arbeitsgrundstellung eine Begrenzungseinrichtung vorgesehen, die von einem im Bereich der dem Anbaubock 11 zugewandten Seite des Schwenkarms 12 bezüglich diesem seitlich versetzt und senkrecht angeordneten Führungsbolzen 30 gebildet ist, welcher in einem zur Schwenkachse A1 des Schwenkarms 12 konzentrisch angeordneten Langloch 32 einer mit dem Anbaubock 11 verbundenen, im wesentlichen senkrecht zur Schwenkachse A1 des Schwenkarms 12 angeordneten Führungsplatte 31 geführt ist (Fig. 11, 12). Auf diese Weise bildet das konzentrisch zur Schwenkachse A1 angeordnete Langloch 32 die Anschläge des Führungsbolzens 30 und somit des Schwenkarms 12 in der Arbeitsgrund- bzw. Ruheposition des Arbeitswerkzeugs 2.

Die Wirkungsweise des aus Lenker 18, Schwenkarm 12 und Anbaubock 11 gebildeten, sowohl bezüglich der Horizontalen als auch der Vertikalen geneigten Dreiecks entspricht im wesentlichen dem aus Schwenkarm 12, Lenkerstange 18, Anbaubock 11 und Schwenkbock 16 gebildete Parallelogramm bei der Ausgestaltung gemäß Fig. 1 bis 10, so dass das Arbeitswerkzeug 2 beim Auffahren gegen ein Hindernis aus seiner senkrecht zur Fahrtrichtung verlaufenden Quererstreckung in Arbeitsgrundstellung (Fig. 4a bis 4c) in eine Schrägposition gedrückt wird, wie sie in den Figuren 5a bis 5c sowie 10b dargestellt ist und sodann ein Anheben des Arbeitswerkzeugs 2 erfolgt. Bei dem in Fig. 11 bis 13 dargestellten Ausführungsbeispiel wird das Arbeitswerkzeug 2 des Arbeitsgeräts 1 beim Anlaufen gegen ein Hindernis zunächst horizontal von dem Hindernis weg verschwenkt, bis die Federkraft des Lenkers 18 so groß wird, dass sie das Arbeitswerkzeug 2 anhebt, um dem Hindernis auszuweichen. Nach Umfahren des Hindernisses wird das Arbeitswerkzeug 2 dann - von der Federkraft des Lenkers 18 unterstützt - rein mechanisch wieder in seine Arbeitsgrundstellung zurückgebracht.

### Bezugszeichenliste

- 1: Arbeitsgerät
- 2: Arbeitswerkzeug
- 3: Gehäuse
- 4: Rotor
- 5: Riemen
- 6: Motor
- 7: Tragteil
- 8: Häckselkamm
- 9: Zwischengelenkteil
- 10: Tragkonstruktion
- 11: Anbaubock
- 11a: horizontaler Schenkel (von 11)
- 11b: Strebe (von 11)
- 12: Schwenkarm
- 13: Zugbock
- 14: Schwenkbolzen
- 15: Drehwelle
- 16: Schwenkbock
- 16a: Schwenkbolzen
- 17: Schwenkzylinder
- 18: Lenkerstange
- 19: Ösen
- 20: Anlenkgehäuse
- 21: Drehwelle
- 22: Schwenkbolzen
- 23: Schwenkeinrichtung
- 24: Schwenkzylinder
- 25: Schraubenfeder
- 26: Lochleiste
- 27: Bolzen
- 28: Lochleiste
- 29: Bolzen
- 30: Führungsbolzen
- 31: Führungsplatte
- 32: Langloch

- F: (Zug-)Fahrzeug

- A: Achse
- A1: vertikale Achse
- A2: horizontale Achse
- A3: verikale Achse
- A4: horizontale Achse
- A5: Drehachse

- α: Winkel
- β: Winkel

## Patentansprüche

1. Arbeitsgerät (1), wie Mäher, Mulcher, Bodenfräse oder dergleichen, zum Anbau an ein Fahrzeug (F), mit einem Anbaubock (11), einem Arbeitswerkzeug (2) und mindestens einem beide verbindenden, um eine vertikale Achse (A1) am Anbaubock (11) verschwenkbaren Schwenkarm (12), **dadurch gekennzeichnet, dass** der Schwenkarm (12) am Anbaubock (11) auch um eine horizontale Achse (A2) schwenkbar angelenkt ist und dass ein Lenker (18) den Anbaubock (11) und das Arbeitswerkzeug (2) und/oder den Schwenkarm (12) derart verbindet, dass der Lenker (18) in Arbeitsgrundstellung des Werkzeugs (2) weder eine vertikale noch eine horizontale Ebene mit dem Schwenkarm (12) bildet.

2. Gerät nach Anspruch 1, **dadurch gekennzeichnet, dass** eine den Schwenkarm (12) und den Lenker (18) verbindede Fläche zwischen 15° und 75° bezüglich der Horizontalen bzw. der Vertikalen geneigt ist.

3. Gerät nach Anspruch 1 oder 2, **dadurch gekennzeichnet, dass** der Schwenkarm (12) und der Lenker (18) unter einem endlichen Winkel (Winkel ≠ 0) zueinander ausgerichtet sind.

4. Gerät nach einem der Ansprüche 1 bis 3, **dadurch gekennzeichnet, dass** der vertikale Winkel (α) zwischen Schwenkarm (12) und Lenker (18) zwischen 30 und 45° beträgt.

5. Gerät nach einem der Ansprüche 1 bis 4, **dadurch gekennzeichnet, dass** der Lenker (18) am Anbaubock (11) oberhalb des Schwenkarms (12) angelenkt ist.

6. Gerät nach einem der Ansprüche 1 bis 5, **dadurch gekennzeichnet, dass** der Schwenkarm (12) über einen Zugbock (13) am Anbaubock (11) befestigt ist.

7. Gerät nach Anspruch 6, **dadurch gekennzeichnet, dass** der Zugbock (13) um eine horizontale Achse (A2) relativ zum Anbaubock (11) verschwenkbar ist.

8. Gerät nach einem der Ansprüche 1 bis 7, **dadurch gekennzeichnet, dass** der Lenker (18) von einer starren, den Anbaubock (11) und das Arbeitswerkzeug (2) verbindenden Lenkerstange gebildet ist.

9. Gerät nach Anspruch 8, **dadurch gekennzeichnet, dass** die Lenkerstange (18) an ihrem dem Arbeitswerkzeug (2) zugewandten Ende unterhalb des Schwenkarms (12) mit dem Werkzeug (2) verbunden ist.

10. Gerät nach Anspruch 8 oder 9, **dadurch gekennzeichnet, dass** die Lenkerstange (18) in einer im wesentlichen parallel zur Erstreckungsrichtung des Schwenkarms (12) ausgerichteten senkrechten Ebene liegt.

11. Gerät nach einem der Ansprüche 8 bis 10, **dadurch gekennzeichnet, dass** die Lenkerstange (18) mittels eines mindestens zwei Schwenkachsen (A4, A5) aufweisenden Gelenkteils am Anbaubock (11) angelenkt ist.

12. Gerät nach Anspruch 11, **dadurch gekennzeichnet, dass** das Gelenkteil ein um eine horizontale Achse (A4) verschwenkbares Gehäuse (20) aufweist, in dem die Lenkerstange (18) um eine senkrecht zur Erstreckungsrichtung der Lenkerstange (18) verlaufende weitere Schwenkachse (A5) schwenkbar ist.

13. Gerät nach einem der Ansprüche 8 bis 12, **dadurch gekennzeichnet, dass** der um die horizontale Achse (A2) relativ zum Anbaubock (11) verschwenkbare Zugbock (13) einen senkrecht zur Erstreckungsrichtung des Schwenkarms (12) verlaufenden Schwenkbolzen (14) trägt, mittels dessen die Schwenkachse (A1) verschwenkbar ist.

14. Gerät nach einem der Ansprüche 8 bis 13, **dadurch gekennzeichnet, dass** die Lenkerstange (18) in der vertikalen Projektion die gleiche Länge und den gleichen Winkel wie der Schwenkarm (12) aufweist und dadurch auch die Parallelleitungsfunktion übernimmt.

15. Gerät nach einem der Ansprüche 1 bis 7, **dadurch gekennzeichnet, dass** der Lenker (18) in Erstreckungsrichtung elastisch ausgebildet ist und den Anbaubock (11) mit dem Schwenkarm (12) verbindet.

16. Gerät nach Anspruch 15, **dadurch gekennzeichnet, dass** der Lenker (18) eine Fluidfeder aufweist.

17. Gerät nach Anspruch 15, **dadurch gekennzeichnet, dass** der Lenker (18) eine Schraubenfeder (25) aufweist.

18. Gerät nach einem der Ansprüche 15 bis 17, **dadurch gekennzeichnet, dass** der Lenker (18) in Ruhestellung des Arbeitswerkzeugs (2) in Richtung der Arbeitsgrundstellung desselben elastisch vorbelastet ist.

19. Gerät nach einem der Ansprüche 15 bis 18, **dadurch gekennzeichnet, dass** der Lenker (18) in Arbeitsgrundstellung des Arbeitswerkzeugs (2) geringfügig gedehnt ist.

20. Gerät nach einem der Ansprüche 15 bis 19, **dadurch gekennzeichnet, dass** der Befestigungspunkt des Lenkers (18) an dem Schwenkarm (12) und/oder an dem Anbaubock (11) verstellbar ist.

21. Gerät nach Anspruch 20, **dadurch gekennzeichnet, daß** die Befestigungspunkte des Lenkers (18) an dem Schwenkarm (12) und/oder an dem Anbaubock (11) durch in Lochleisten (26, 28) am Schwenkarm (12) und/oder am Anbaubock (11) eingreifende, im wesentlichen horizontal angeordnete Bolzen (27, 29) gebildet sind.

22. Gerät nach einem der Ansprüche 15 bis 21, **dadurch gekennzeichnet, dass** der um die horizontale Achse (A2) relativ zum Anbaubock (11) verschwenkbare Zugbock (13) einen im wesentlichen senkrecht zur Erstreckungsrichtung des Schwenkarms (12) verlaufenden Schwenkbolzen (14) trägt, dessen Schwenkwinkel durch eine Begrenzungseinrichtung einstellbar ist.

23. Gerät nach Anspruch 22, **dadurch gekennzeichnet, dass** die Begrenzungseinrichtung von einem im Bereich der dem Anbaubock (11) zugewandten Seite des Schwenkarms (12) bezüglich diesem seitlich versetzt und senkrecht angeordneten Führungsbolzen (30) gebildet ist, welcher in einem zur Schwenkachse (A1) des Schwenkarms (12) konzentrisch angeordneten Langloch (32) einer mit dem Anbaubock (11) verbundenen, im wesentlichen senkrecht zur Schwenkachse (A1) des Schwenkarms (12) angeordneten Führungsplatte (31) geführt ist.

24. Gerät nach einem der vorangehenden Ansprüche, **dadurch gekennzeichnet, dass** das Arbeitswerkzeug (2) an dem dem Anbaubock (11) abgewandten Ende des Schwenkarms (12) drehbar gelagert ist.

25. Gerät nach Anspruch 24, **dadurch gekennzeichnet, dass** das Arbeitswerkzeug (2) über ein Zwischengelenkteil (9) um eine parallel zur Erstreckungsrichtung des Schwenkarms (12) gerichtete Drehachse (A) drehbar ist.

26. Gerät nach einem der vorangehenden Ansprüche, **dadurch gekennzeichnet, dass** das Arbeitswerkzeug (2) mit Stützteilen (7) versehen ist.

## Claims

1. Implement (1), such as a harvester, mulcher, rotary cultivator or the like, for attachment to a vehicle (F), having an attachment member (11), a working tool (2) and at least one swivel arm (12) swivellable about a vertical axis (A1) at attachment member (11) and connecting said two members, **characterized in that** the swivel arm (12) is also swivellably articulated about a horizontal axis (A2) at attachment member (11) and that a linkage (18) links the attachment member (11) and working tool (2) and/or swivel arm (12) in such a way that in the basic working position of the tool (2), the linkage (18) forms neither a vertical, nor a horizontal plane with the swivel arm (12).

2. Implement according to claim 1, **characterized in that** a surface linking the swivel arm (12) and the linkage (18) is inclined by 15 to 75° relative to the horizontal or vertical.

3. Implement according to claim 1 or 2, **characterized in that** the swivel arm (12) and linkage (8) are oriented under a finite angle (angle ≠0) to one another.

4. Implement according to one of the claims 1 to 3, **characterized in that** the vertical angle (α) between the swivel arm (12) and linkage (18) is between 30 and 45°.

5. Implement according to one of the claims 1 to 4, **characterized in that** the linkage (18) is articulated to the attachment member (11) above the swivel arm (12).

6. Implement according to one of the claims 1 to 5, **characterized in that** the swivel arm (12) is fixed by means of a tension member (13) to the attachment member (11).

7. Implement according to claim 6, **characterized in that** the tension member (13) is swivellable about a horizontal axis (A2) relative to the attachment member (11).

8. Implement according to one of the claims 1 to 7, **characterized in that** the linkage (18) is formed by a rigid linkage bar linking the attachment member (11) and working tool (2).

9. Implement according to claim 8, **characterized in that** at its end facing the working tool (2), the linkage bar (18) is connected below the swivel arm (12) to the tool (2).

10. Implement according to claim 8 or 9, **characterized in that** the linkage bar (18) is located in a perpendicular plane oriented substantially parallel to the extension direction of the swivel arm (120.

11. Implement according to one of the claims 8 to 10, **characterized in that** the linkage bar (18) is articulated to the attachment member (11) by means of an articulation or hinge part having at least two swivel axes (A4, A5).

12. Implement according to claim 11 , **characterized in that** the hinge part has a casing (20) swivellable about a horizontal axis (A4) and in which the linkage bar (18) can be swivelled about a further swivel axis (A5) perpendicular to the extension direction of the linkage bar (18).

13. Implement according to one of the claims 8 to 12, **characterized in that** the tension member (13) swivellable about the horizontal axis (A2) relative to the attachment member (11) carries a swivel bolt (14) running perpendicular to the extension direction of the swivel arm (12) and by means of which the swivel axis (A1) can be swivelled.

14. Implement according to one of the claims 8 to 13, **characterized in that** in the vertical projection the linkage bar (18) has the same length and the same angle as the swivel arm (12) and consequently also takes over the parallel line function.

15. Implement according to one of the claims 1 to 7, **characterized in that** the linkage (18) is constructed elastically in the extension direction and links the attachment member (11) with the swivel arm (12).

16. Implement according to claim 15, **characterized in that** the linkage (18) has a fluid spring.

17. Implement according to claim 15, **characterized in that** the linkage (18) has a helical spring (25).

18. Implement according to one of the claims 15 to 17, **characterized in that**, in the rest position of the working tool (2), the linkage (18) is elastically preloaded in the direction of its basic working position.

19. Implement according to one of the claims 15 to 18, **characterized in that** the linkage (18) is slightly expanded in the basic working position of the tool (2).

20. Implement according to one of the claims 15 to 19, **characterized in that** the fixing point of the linkage (18) to the swivel arm (12) and/or to the attachment member (11) is adjustable.

21. Implement according to claim 20, **characterized in that** the fixing points of the linkage (18) to the swivel arm (12) and/or to the attachment member (11) are formed by substantially horizontally positioned bolts (27, 29) engaging in perforated strips (26, 28) on the swivel arm (12) and/or the attachment member (11).

22. Implement according to one of the claims 15 to 21, **characterized in that** the tension member (13) swivellable about the horizontal axis (A2) relative to the attachment member (11) carries a swivel bolt (14) running substantially perpendicular to the extension direction of the swivel arm (12) and whose swivel angle is adjustable by a limiting device.

23. Implement according to claim 22, **characterized in that** the limiting device is formed by a guide bolt (30) positioned vertically in the vicinity of the side of the swivel arm (12) facing the attachment member (11) and laterally displaced with respect thereto, said bolt being guided in an elongated hole (32), arranged concentrically to the swivel axis (A1) of the swivel arm (12), of a guide plate (31) connected to the attachment member (11) and positioned substantially perpendicular to the swivel axis (A1) of swivel arm (12).

24. Implement according to one of the preceding claims, **characterized in that** the working tool (2) is mounted in rotary manner on the end of the swivel arm (12) remote from the attachment member (11).

25. Implement according to claim 24, **characterized in that** the working tool (2) is rotatable by means of an intermediate hinge part (9) about a rotation axis (A) directed parallel to the extension direction of the swivel arm (12).

26. Implement according to one of the preceding claims, **characterized in that** the working tool (2) is provided with support parts (7).

## Revendications

1. Machine de travail (1) telle qu'une faucheuse, une machine pour effectuer le paillage, une fraise rotative ou similaire à monter sur un véhicule (F), comprenant un support de montage (11), et un outil de travail (2) reliés entre eux par au moins un bras articulé (12) monté pivotant sur le support de montage (11) autour d'un axe vertical (A1), **caractérisée en ce que** le bras articulé (12) sur le support de montage (11) est également articulé pivotant autour d'un axe horizontal (A2) et **en ce qu'**un levier oscillant transversal (18) relie le support de montage (11) et l'outil de travail (2) et/ou le bras articulé (12) de telle façon que le levier oscillant transversal (18) ne forme ni un plan vertical ni un plan horizontal avec le bras articulé (12) dans la position normale de travail de l'outil (2).

2. Machine selon la revendication 1, **caractérisée en ce qu'**une surface de liaison reliant le bras articulé (12) et le levier oscillant transversal (18) présente une inclinaison comprise entre 15° et 75° par rapport à l'horizontale ou à la verticale.

3. Machine selon la revendication 1 ou 2, **caractérisée en ce que** le bras articulé (12) et le levier oscillant transversal (18) forment entre eux un angle fini (angle ≠ 0).

4. Machine selon l'une quelconque des revendications 1 à 3, **caractérisée en ce que** l'angle dans un plan vertical (α) entre le bras articulé (12) et le levier oscillant transversal (18) est compris entre 30 et 45°.

5. Machine selon l'une quelconque des revendications 1 à 4, **caractérisée en ce que** le levier oscillant transversal (18) est articulé sur le support de montage (11) en amont du bras articulé (12).

6. Machine selon l'une quelconque des revendications 1 à 5, **caractérisée en ce que** le bras articulé (12) est fixé au support de montage (11) par un support de traction (13).

7. Machine selon la revendication 6, **caractérisée en ce que** le support de traction (13) peut pivoter autour d'un axe horizontal (A2) par rapport au support de montage (11).

8. Machine selon l'une quelconque des revendications 1 à 7, **caractérisée en ce que** le levier oscillant transversal (18) est constitué d'une bielle de direction rigide reliant le support de montage (11) à l'outil de travail (2).

9. Machine selon la revendication 8, **caractérisée en ce que** le levier oscillant transversal (18) est relié à l'outil (2) par son extrémité en face de l'outil de travail (2) en-dessous du bras articulé (12).

10. Machine selon la revendication 8 ou 9, **caractérisée en ce que** le levier oscillant transversal (18) est situé dans un plan vertical sensiblement parallèle à la direction d'extension du bras articulé (12).

11. Machine selon l'une quelconque des revendications 8 à 10, **caractérisée en ce que** la bielle de direction (18) est articulée au support de montage (11) par une pièce d'articulation présentant au moins deux axes de pivotement (A4, A5).

12. Machine selon la revendication 11, **caractérisée en ce que** la pièce d'articulation présente un bloc (20) pivotant autour d'un axe horizontal (A4), dans lequel la bielle de direction (18) peut pivoter autour d'un axe de pivotement supplémentaire (A5) s'étendant verticalement par rapport à la direction d'extension de la bielle de direction (18).

13. Machine selon l'une quelconque des revendications 8 à 12, **caractérisée en ce que** le support de traction (13) pivotant autour de l'axe horizontal (A2) par rapport au support de montage (11) porte un axe de pivotement (14) s'étendant verticalement par rapport à la direction d'extension du bras articulé (12), au moyen duquel l'axe de pivotement (A1) peut être pivoté.

14. Machine selon l'une quelconque des revendications 8 à 13, **caractérisée en ce que** la bielle de direction (18) présente en projection verticale la même longueur et le même angle que le bras articulé (12) et assure ainsi également la fonction de guidage parallèle.

15. Machine selon l'une quelconque des revendications 1 à 7, **caractérisée en ce que** le levier oscillant transversal (18) est élastique dans sa direction d'extension et **en ce qu'**il relie le support de montage (11) au bras articulé (12).

16. Machine selon la revendication 15, **caractérisée en ce que** le levier oscillant transversal (18) présente un ressort hydraulique.

17. Machine selon la revendication 15, **caractérisée en ce que** le levier oscillant transversal (18) présente un ressort à vis (25).

18. Machine selon l'une quelconque des revendications 15 à 17, **caractérisée en ce que** le levier oscillant transversal (18) présente une précontrainte élastique dans la position de repos de l'outil de travail (2) en direction de la position normale de travail de celui-ci.

19. Machine selon l'une quelconque des revendications 15 à 18, **caractérisée en ce que** le levier oscillant transversal (18) est légèrement allongé dans la position normale de travail de l'outil de travail (2).

20. Machine selon l'une quelconque des revendications 15 à 19, **caractérisée en ce que** le point de fixation du levier oscillant transversal (18) sur le bras articulé (12) et /ou sur le support de montage (11) est réglable.

21. Machine selon la revendication 20, **caractérisée en ce que** les points de fixation du levier oscillant transversal (18) sur le bras articulé (12) et/ou sur le support de montage (11) sont constitués par des éléments d'ancrage (27,29) disposés sensiblement horizontaux venant en prise dans des platines perforées (26,28) sur le bras articulé (12) et/ou le support de montage (11).

22. Machine selon l'une quelconque des revendications 15 à 21, **caractérisée en ce que** le support de traction (13) pivotant autour de l'axe horizontal (A2) par rapport au support de montage (11) porte un axe de pivotement (14) s'étendant sensiblement perpendiculaire à la direction d'extension du bras articulé (12), dont l'angle de pivotement peut être réglé par un dispositif de limitation.

23. Machine selon la revendication 22, **caractérisée en ce que** le dispositif de limitation consiste en un guide (30) disposé perpendiculaire dans la zone de la face du bras articulé (12) en regard du support de montage (11) et décalé latéralement par rapport à celui-ci, guide qui est conduit dans une ouverture oblongue (32) disposée concentrique à l'axe de pivotement (A1) du bras articulé (12) et ménagée dans une plaque de guidage (31) reliée au support de montage (11) et disposée sensiblement perpendiculaire à l'axe de pivotement (A1) du bras articulé (12).

24. Machine selon l'une quelconque des revendications précédentes, **caractérisée en ce que** l'outil de travail (2) est monté rotatif sur l'extrémité du bras articulé (12) opposée au support de montage (11).

25. Machine selon la revendication 24, **caractérisée en ce que** l'outil de travail (2) est rotatif au moyen d'une pièce intermédiaire (9) articulée autour d'un axe de rotation (A) orienté parallèle à la direction d'extension du bras articulé (12).

26. Machine selon l'une quelconque des revendications précédentes, **caractérisée en ce que** l'outil de travail (2) est muni de pièces porteuses (7).
